# EUROPÄISCHE PATENTSCHRIFT

(11) **EP 3 927 455 B1**
(45) Veröffentlichungstag und Bekanntmachung des Hinweises auf die Patenterteilung: **15.01.2025**
(21) Anmeldenummer: 20706488.2
(22) Anmeldetag: 21.02.2020
(51) Int. Cl.: B01J 3/02, B01J 3/03, B01J 3/04

(54) **DRUCKBEHÄLTERSYSTEM**
PRESSURE VESSEL SYSTEM
SYSTÈME À CONTENANT SOUS PRESSION

(30) Priorität: 21.02.2019 DE 202019100988 U
(43) Veröffentlichungstag der Anmeldung: 29.12.2021
(73) Patentinhaber: MLS Mikrowellen-Labor-Systeme GmbH, 88299 Leutkirch (DE)
(72) Erfinder: LAUTENSCHLÄGER, Werner, 88299 Leutkirch (DE)
(74) Vertreter: Kiwit, Benedikt
(86) Internationale Anmeldenummer: PCT/EP2020/054598
(87) Internationale Veröffentlichungsnummer: WO 2020/169791

(56) Entgegenhaltungen:
- EP-A1- 1 198 290
- EP-A1- 3 603 789
- WO-A1-95/13133
- US-A- 4 620 563

## Beschreibung

### 1. Gebiet der Erfindung

Die vorliegende Erfindung betrifft ein Druckbehältersystem, aufweisend einen Druckbehälter mit einer Reaktionskammer als Druckraum zum Auslösen und/oder Fördern chemischer und/oder physikalischer Druckreaktionen von in der Reaktionskammer aufgenommenen Proben.

### 2. Hintergrund

Druckbehältersysteme der eingangs genannten Art sind prinzipiell aus dem Stand der Technik bekannt. Zudem ist es bekannt, sämtliche Ventile, Sensoren und Fluidzuleitungen und -ableitungen mit der Reaktionskammer über Rohr- und/oder Schlauchverbindungen fluidisch mit dem Druckbehälter bzw. dessen Reaktionskammer zu verbinden. Nachteilig daran ist, dass sehr viele Anschlüsse mit Dichtringen, Verschraubungen etc. erforderlich sind, wodurch die Verbindungen nicht dauerhaft dicht und weniger druckbeständig sind. Ferner ergeben sich insgesamt sehr lange Leitungen, in denen aggressive Chemikalien längere Zeit stehen bzw. kondensieren und somit zu metallischen Verunreinigungen (Einbringung von Elementen) und zur Korrosion der jeweiligen Leitung führen können. Die Leitungen neigen dadurch zu verhältnismäßig hohen analytischen Blindwerten. Durch die verhältnismäßig große Anzahl der Rohr-und/oder Schlauchverbindungen und der über diese angeschlossenen Vorrichtungen ist ferner auch eine effiziente Reinigung der jeweiligen Kupplungen und Leitungen nicht möglich. Außerdem gestaltet sich die Montage und die Wartung der fluidisch zu verbindenden Vorrichtungen verhältnismäßig aufwendig.

Zusammenfassend ist also festzuhalten, dass die aus dem Stand der Technik bekannten Druckbehältersysteme einen verhältnismäßig aufwendigen und unsicheren fluidischen Anschluss der Vorrichtungen (Ventile, Sensoren, Fluid Einlass, Fluid-Auslass etc.) an die Reaktionskammer bereitstellen. WO95/13133 offenbart einen Druckbehältersystem.

Ausgehend von diesem Stand der Technik stellt sich die vorliegende Erfindung die Aufgabe, die oben genannten Nachteile aus dem Stand der Technik zu überwinden, also insbesondere ein Druckbehältersystem bereitzustellen, dass sämtliche Vorrichtungen mit der Reaktionskammer effizienter und sicherer fluidisch verbinden kann.

Diese und andere Aufgaben, die beim Lesen der folgenden Beschreibung noch genannt werden oder vom Fachmann erkannt werden können, werden mit dem Gegenstand des unabhängigen Anspruchs gelöst. Vorteilhafte Weiterbildungen sind Gegenstand der hierauf rückbezogenen Unteransprüche.

### 3. Ausführliche Beschreibung der Erfindung

Ein erfindungsgemäßes Druckbehältersystem weist auf: einen Druckbehälter mit einer Reaktionskammer als Druckraum zum Auslösen und/oder Fördern chemischer und/oder physikalischer Druckreaktionen von in der Reaktionskammer aufgenommenen Proben, und eine starr mit dem Druckbehälter bzw. mit wenigstens einem Teil des Druckbehälters verbundene starre Schiene mit einem ersten Anschluss zum Fluid-Einlass, einem zweiten Anschluss zum Fluid-Auslass und einer den ersten Anschluss mit dem zweiten Anschluss fluidisch verbindenden Fluid-Leitung. Die Fluid-Leitung ist über den zweiten Anschluss mit der Reaktionskammer fluidisch verbunden, und die Schiene weist wenigstens einen mit der Fluid-Leitung fluidisch verbundenen dritten Anschluss auf, welcher mit einer Vorrichtung verbindbar ist, sodass die Vorrichtung mit der Fluid-Leitung und somit mit der Reaktionskammer fluidisch verbunden ist.

Mit anderen Worten wird ein Druckbehältersystem vorgeschlagen, das mittels einer einzigen starren Schiene sämtliche Vorrichtungen (Sensoren, Fluidzuleitungen, Fluidableitungen etc.) vorzugsweise tragend halten und mit der Reaktionskammer fluidisch verbinden kann. Hierzu wird die Fluid-Leitung bevorzugt durch einen Hohlraum - bspw. eine Bohrung - in der starren Schiene gebildet, wobei dieser Hohlraum sämtliche Anschlüsse miteinander (fluidisch) verbindet und somit die die Anschlüsse verbindende Fluid-Leitung bildet. Die Fluid-Leitung bzw. der Hohlraum ist folglich mit bzw. in der starren Schiene integral bereitgestellt. Ferner bewirkt die starre, also insbesondere unbewegliche, nicht elastische und direkte mechanische Verbindung zwischen dem Druckbehälter und der Schiene, dass die Schiene besonders fest und gut zugänglich mit dem Druckbehälter bzw. der Reaktionskammer fluidisch und mechanisch verbunden ist. Auf diese Weise können sämtliche Vorrichtungen besonders effizient (Reduktion der Montagezeit, des Baumaterials, des Bauraums etc.) und sicher, insbesondere starr mit der Schiene und somit der Reaktionskammer fluidisch verbunden werden. Aufwendig verlegte und unsichere Rohr- und Schlauchverbindungen, wie sie aus dem Stand der Technik bekannt sind, können somit komplett entfallen oder wenigstens erheblich reduziert werden.

Vorzugsweise weist der Druckbehälter einen Deckel auf, welcher zwischen einer Offenstellung, in der die Reaktionskammer geöffnet ist, und einer Schließstellung, in der die Reaktionskammer geschlossen ist, bewegbar ist, wobei die Schiene starr mit dem Deckel (als Teil des Druckbehälters und mithin also mit dem Druckbehälter) verbunden ist. Da der Deckel in der Regel an einer gut zugänglichen Stelle des Druckbehälters vorgesehen ist, kann somit eine besonders gute, also insbesondere effiziente und sichere Zugänglichkeit der Schiene bereitgestellt werden. Ferner eignet sich der Deckel, insbesondere dessen von der Reaktionskammer abgewandte Seite, für eine besonders gute starre Befestigung der Schiene.

Vorzugsweise ist die Schiene derart gestaltet und mit dem Deckel verbunden, dass durch Bewegen, vorzugsweise durch Heben und Senken, der Schiene der Deckel zwischen der Offenstellung und der Schließstellung bewegt werden kann. Mit anderen Worten kann die Schiene als Lift-Stange zum vorgenannten Bewegen des Deckels vorgesehen sein. Folglich kann auf weitere Mittel zum Bewegen des Deckels zwischen der Offenstellung der Schließstellung verzichtet werden, sodass das Druckbehältersystem besonders kompakt gestaltet werden kann. Und da die wenigstens eine Vorrichtung bevorzugt tragend von der Schiene während dieser Bewegung gehalten werden kann, besteht keine Gefahr, dass eine fluidische Leitung (beispielsweise ein Schlauch) zwischen der Schiene und der wenigstens einen Vorrichtung diese Bewegung beeinflusst oder stört.

Die Schiene weist vorzugsweise einen Befestigungsbereich auf, über welchen die Schiene an eine Fördervorrichtung, beispielsweise eine Hebe- und Senkvorrichtung, zum Bewegen bzw. Heben und Senken der Schiene und somit zum Bewegen des Deckels zwischen der Offenstellung und der Schließstellung befestigt werden kann. Der Befestigungsbereich bewirkt dabei insbesondere, dass die Schiene in einer definierten Position und/oder Orientierung an die Fördervorrichtung befestigt werden kann.

Das Druckbehältersystem kann ferner eine Fördervorrichtung, vorzugsweise eine Hebe- und Senkvorrichtung, zum Bewegen bzw. Heben und Senken der Schiene und somit zum Bewegen des Deckels zwischen der Offenstellung und der Schließstellung aufweisen, wobei die Schiene vorzugsweise über den Befestigungsbereich an der Fördervorrichtung befestigt ist. Somit kann der Deckel besonders einfach zwischen der Offenstellung und der Schließstellung, insbesondere automatisch und/oder mithilfe von einem Antrieb (elektrischer Motor etc.), bewegt werden.

Bevorzugt ist, wenn die Schiene relativ zur Fördervorrichtung bzgl. einer Achse (beispielsweise entlang einer translatorischen Achse oder um eine Neigeachse) bewegbar, insbesondere neigbar ist und das Druckbehältersystem eine Sensorik aufweist, welche eingerichtet ist, die Schließstellung des Deckels auf Basis einer Relativbewegung, insbesondere Neigebewegung, der Schiene relativ zur Fördervorrichtung und bzgl. der Achse zu erkennen, wobei die Relativbewegung durch Bewegen des Deckels in die Schließstellung bewirkt wird. Die so erkannte Schließstellung des Deckels kann dann beispielsweise an eine Steuervorrichtung weitergegeben werden, um das Druckbehältersystem in entsprechender Weise zu steuern. Beispielsweise kann die Steuervorrichtung dann das Druckbehältersystem derart steuern, dass die Druckreaktion in der Reaktionskammer durchgeführt wird und/oder der Deckel für eine anschließende Druckreaktion in der Reaktionskammer zusätzlich gesichert wird, beispielsweise mittels eines Schließ- bzw. Sicherungselements.

Vorzugsweise ist die Sensorik eingerichtet, durch die Relativbewegung eine Anpresskraft des Deckels zum Verschließen der Reaktionskammer in der Schließstellung zu erfassen und die Schließstellung zu erkennen, sobald die Anpresskraft eine definierte Schwellenanpresskraft übersteigt. Auf diese Weise kann besonders einfach sichergestellt werden, dass der Deckel mit ausreichend Anpresskraft die Reaktionskammer in der Schließstellung verschließt, um somit sicher die Druckreaktion in der Reaktionskammer durchzuführen. Ferner kann somit verhindert werden, dass der Deckel eine zu hohe Verschlusskraft, die zu Schäden bzw. Verbiegungen des Deckels und der Schiene führen könnte.

Der Druckbehälter kann eine die Reaktionskammer (geschlossen umlaufend) umgebende Drückbehälterwand aufweisen, wobei die Schiene starr mit der Drückbehälterwand (als Teil des Druckbehälters und mithin also mit dem Druckbehälter) verbunden ist. Dadurch kann insbesondere bewirkt werden, dass die Schiene bezüglich der Drückbehälterwand stationär bleibt, während der Deckel zwischen der Offenstellung und der Schließstellung bewegt wird. Somit kann die Bedienbarkeit des Druckbehältersystems, insbesondere wegen des weniger belasteten Deckels und des somit einfacheren Anhebens des Deckels, verbessert werden.

Die Drückbehälterwand kann eine Bohrung aufweisen, wobei die Fluid-Leitung wenigstens über den zweiten Anschluss und die Bohrung und vorzugsweise über eine weitere im Deckel ausgebildete Bohrung mit der Reaktionskammer fluidisch verbunden ist. Somit kann eine besonders gute fluidische Verbindung zwischen Schiene bzw. Fluid-Leitung und Reaktionskammer bereitgestellt werden. Ist ferner die weitere Bohrung vorgesehen, so kann ein Fluid der Fluid-Leitung vorteilhaft von oberhalb der Reaktionskammer der Reaktionskammer zugeführt werden, während die Schiene bzw. die Fluid-Leitung platzsparend seitlich von der Reaktionskammer vorgesehen ist.

Das Druckbehältersystem kann ein Befestigungsmittel zum Befestigen der Schiene an den Druckbehälter bzw. das Teil des Druckbehälters, vorzugsweise an die Druckbehälterwand und/oder den Deckel, aufweisen. Das Befestigungsmittel stellt somit die starre Verbindung zwischen Schiene und Druckbehälter bereit und kann bewirken, dass die Schiene selbstdichtend mit dem Druckbehälter bzw. der Reaktionskammer, also ohne weitere Dichtungselemente, fluidisch verbunden ist. Das Befestigungsmittel ist vorzugsweise derart ausgebildet, dass die Fluid-Leitung über den zweiten Anschluss und das Befestigungsmittel, beispielsweise über eine durch das Befestigungsmittel verlaufende Durchgangsbohrung, mit der Reaktionskammer fluidisch verbunden ist. Somit kann das Befestigungsmittel sowohl die mechanische als auch die fluidische Verbindung zwischen Schiene und Druckbehältersystem bereitstellen. Auf diese Weise kann der Montageaufwand reduziert und der Bauraum noch weiter optimiert werden.

Das Druckbehältersystem kann ferner eine Steuervorrichtung zur Steuerung von mit der Schiene fluidisch verbundenen Vorrichtungen und/oder zur Steuerung der Bewegung des Deckels bzw. der Schiene, insbesondere der Fördervorrichtung, aufweisen.

Vorzugsweise ist die Steuervorrichtung eingerichtet, der Fluid-Leitung über den ersten Anschluss ein Fluid zum Spülen der Fluid-Leitung zuzuführen. Wegen der besonders einfachen, insbesondere kurzen und geraden Ausgestaltung der Schiene bzw. der Fluid-Leitung kann somit die Fluid-Leitung und die mit der Fluid-Leitung fluidisch verbundenen Anschlüsse besonders effizient gespült werden, insbesondere mit lediglich einem von der Steuervorrichtung gesteuerten Spülstrom, beispielsweise mit einem Lade-Fluid zur Druckbeaufschlagung (für die Druckreaktion) der Reaktionskammer. Die Fluid-Leitung und die mit der Fluid-Leitung fluidisch verbundenen Anschlüsse bzw. Vorrichtungen werden folglich effektiv insbesondere von aggressiven Chemikalien (Kondensate, Rückstände etc., insbesondere HCl, Chlor, Flusssäure) befreit. Besonders bevorzugt ist die Steuervorrichtung eingerichtet, vor dem Spülen den Deckel in Richtung der Offenstellung derart zu bewegen, dass während des Spülens der Fluid-Leitung der Deckel weniger geöffnet ist als in der Offenstellung. Das Spülen mit offenem Deckel dient insbesondere dem noch effektiveren Spülen der gesamten Reaktionskammer sowie des Deckels, während durch die im Vergleich zur Offenstellung geringere Zugänglichkeit der Reaktionskammer von außen (insbesondere lediglich wenige Zentimeter) kein Herausspritzen der Chemikalien aus der Reaktionskammer stattfindet; vielmehr entweichen in dieser Stellung des Deckels lediglich das Spül-Fluid bzw. die vom Spül-Fluid gespülten Stoffe.

Vorzugsweise weist das Druckbehältersystem ein mit dem dritten Anschluss (fluidisch) verbundenes Ventil auf, wobei die Steuervorrichtung eingerichtet ist, vor dem Spülen das Ventil zu öffnen, sodass ein in der Reaktionskammer herrschender Druck abgebaut wird. Der Druckabbau durch das Ventil bewirkt somit ein Vorspülen vor dem eigentlichen Spülen mittels des der Fluid-Leitung zugeführten Fluids. Ferner kann durch die durch das Ventil bewirkte Druckentlastung das Fluid zum Spülen der Fluid-Leitung und/oder der Reaktionskammer besonders einfach zugeführt werden und somit wenigstens die Fluid-Leitung und vorzugsweise auch die Reaktionskammer besonders effizient spülen. Für einen besonders effizienten Spülvorgang ist es bevorzugt, wenn die Steuervorrichtung eingerichtet ist, das Ventil vor dem Bewegen des Deckels in Richtung der Offenstellung zu schließen. Somit kann das Fluid zum Spülen besonders gut durch die Fluid-Leitung und in die Reaktionskammer strömen, um diese zu spülen.

Der wenigstens eine dritte Anschluss kann integral mit der Schiene ausgebildet sein. Somit kann insbesondere bewirkt werden, dass zum fluidischen Verbinden bzw. Befestigen der jeweiligen Vorrichtung keine weiteren im Hinblick auf die Schiene beweglichen Teile notwendig sind. Die jeweilige Vorrichtung kann somit besonders einfach mit der Schiene und folglich auch mit der Reaktionskammer fluidisch verbunden werden.

Vorzugsweise weist der wenigstens eine dritte Anschluss eine Befestigungsstruktur wie beispielsweise eine Bohrung, insbesondere eine Durchgangsbohrung, zur Befestigung der Vorrichtung auf. Die Befestigungsstruktur weist vorzugsweise einen Befestigungsbereich, insbesondere einen der Vorrichtung korrespondierenden Befestigungsbereich, beispielsweise ein Gewinde und/oder eine Schnappverbindung, zur Befestigung, vorzugsweise zur kraft- und/oder formschlüssigen Befestigung, der Vorrichtung an den dritten Anschluss auf. Somit kann die jeweilige Vorrichtung besonders einfach mit dem wenigstens einen dritten Anschluss starr verbunden bzw. an diesen befestigt werden.

Vorzugsweise ist der wenigstens eine dritte Anschluss ausgebildet, die Vorrichtung mit der Schiene in einer Montagerichtung zu verbinden, wobei die Montagerichtung im Wesentlichen senkrecht zu einer Strömungsrichtung der Fluid-Leitung ist. Dies ist insbesondere für ein besonders gutes Entfernen von in der Fluid-Leitung und/oder an oder in dem dritten Anschluss anhaftenden Chemikalien, Lösemittelresten etc., insbesondere in der Form von Tröpfchen, von Vorteil. Das heißt, die Fluid-Leitung sowie der dritte Anschluss sind zum Entfernen der an diesen anhaftenden Stoffen besonders gut zugänglich. Beispielsweise ist die Montagerichtung die Erstreckungsrichtung der Befestigungsstruktur, insbesondere der Bohrung.

Die Schiene weist wenigstens zwei, vorzugsweise drei, vier, fünf oder sechs oder mehr dritte Anschlüsse auf. Die Schiene kann prinzipiell eine beliebige Anzahl an dritten Anschlüssen aufweisen. Die wenigstens zwei dritten Anschlüssen sind vorzugsweise auf derselben Seite der Schiene mit Bezug zum Druckbehälter vorgesehen, besonders bevorzugt auf einer dem Druckbehälter abgewandten Seite der Schiene. Somit sind die wenigstens zwei dritten Anschlüsse besonders gut zugänglich und raumsparend angeordnet.

Der erste Anschluss kann mit einem Verdichter fluidisch verbindbar sein. Somit kann der Verdichter über den ersten Anschluss ein verdichtetes Fluid der Reaktionskammer zuführen. Vorzugsweise weist das Druckbehältersystem einen mit dem ersten Anschluss fluidisch verbundenen Verdichter zum Zuführen eines (verdichteten) Fluids in die Reaktionskammer auf.

Das Druckbehältersystem kann ein stromaufwärts des ersten Anschlusses vorgesehenes Rückschlagventil aufweisen, welches bevorzugt zwischen dem ersten Anschluss und dem Verdichter vorgesehen ist. Das Rückschlagventil ist eingerichtet, eine aus dem ersten Anschluss in Richtung des Verdichters strömende Strömung zu blockieren. Das Rückschlagventil verhindert insbesondere eine Rückdiffusion und schützt somit die Fluid- bzw. Gasversorgung und den Verdichter.

Das Druckbehältersystem kann ferner einen stromaufwärts des ersten Anschlusses, vorzugsweise stromaufwärts des Rückschlagventils, besonders bevorzugt zwischen dem ersten Anschluss bzw. Rückschlagventil und dem Verdichter vorgesehenen Puffer mit einem definierten Eigenvolumen zur Pufferung von aus dem Verdichter in Richtung des ersten Anschlusses strömenden Fluid aufweisen. Der Puffer stellt einen zusätzlichen Schutz für das Druckbehältersystem bereit, da dieser durch sein Eigenvolumen automatisch wenigstens die Fluid-Leitung der Schiene spült bzw. nachspült, wenn der Druck in der Reaktionskammer, beispielsweise durch Druckausgleich mit dem Umgebungsdruck, abgebaut wird. Der Puffer dient demnach als eine Art Spülbehälter, der automatisch durch dessen Druck bzw. Ladedruck spült.

Vorzugsweise weist der Puffer einen Filter zum Filtern von aus dem Verdichter in Richtung des ersten Anschlusses strömenden Fluid auf. Der Filter bewirkt dabei insbesondere, dass das in Richtung bzw. in die Reaktionskammer strömende Fluid keine ungewollten Bestandteile wie beispielsweise Partikel oder Verunreinigungen aufweist; die ungewollten Bestandteile werden mittels des Filters also besonders gut aus dem in Richtung des ersten Anschlusses strömenden Fluid herausgefiltert.

Das Druckbehältersystem kann ein stromaufwärts des Puffers, vorzugsweise zwischen dem Puffer und dem Verdichter vorgesehenes weiteres Rückschlagventil aufweisen, wobei das weitere Rückschlagventil eingerichtet ist, eine aus dem Puffer in Richtung des Verdichters strömende Strömung zu blockieren. Auf diese Weise kann eine Rückdiffusion besonders gut verhindert und somit die Fluid- bzw. Gasversorgung und der Verdichter besonders gut geschützt werden.

Die Schiene kann aus einem hochdruckresistenten Material hergestellt sein, vorzugsweise derart, dass die Schiene den in der Reaktionskammer herrschenden Drücken zum Auslösen und/oder Fördern chemischer und/oder physikalischer Druckreaktionen, insbesondere in der Fluid-Leitung herrschende Drücke im Bereich von bis zu wenigstens 200 bar, vorzugsweise bis zu wenigstens 500 bar, widerstehen kann.

Die Schiene kann aus einem chemikalienresistenten Material hergestellt sein, und/oder die Fluid-Leitung kann eine chemikalienresistente Auskleidung, insbesondere eine Beschichtung und/oder ein Schlauch, aufweisen, wobei die Auskleidung vorzugsweise aus Kunststoff, besonders bevorzugt aus PTFE (Polytetrafluorethylen) hergestellt ist. Somit kann die Fluid-Leitung insbesondere zum Leiten besonders aggressiver Chemikalien wie beispielsweise Flusssäure zum Einsatz kommen. Das chemikalienresistente Material und/oder die chemikalienresistente Auskleidung bewirkt/bewirken insbesondere, dass durch die Fluid-Leitung strömende Fluide die Fluid-Leitung nicht chemisch und/oder physikalisch verändern bzw. beschädigen, also dass die Fluid-Leitung insbesondere nicht zersetzt wird (Korrosion etc.).

Bevorzugt ist die Schiene aus Metall hergestellt. Zur besonders einfachen Herstellung der Schiene ist die Schiene vorzugsweise aus einem Block, vorzugsweise aus einem einzigen Block, hergestellt.

Die Wandstärke der Schiene ist vorzugsweise größer als der Querschnitt der Fluid-Leitung, also beispielsweise größer als die Höhe und/oder Breite des Querschnitts, insbesondere größer als der Durchmesser der Fluid-Leitung. Mit anderen Worten ist die Schiene vorzugsweise dickwandig ausgebildet, um somit der Schiene ihre starre Struktur zu verleihen. Somit kann eine besonders widerstandsfähige Schiene bereitgestellt werden, um insbesondere den herrschenden Drücken standzuhalten und über den wenigstens einen dritten Anschluss die wenigstens eine Vorrichtung sicher fluidisch zu verbinden.

Die Schiene kann länglich ausgebildet sein, also insbesondere eine in Richtung der Fluid-Leitung verlaufende Längsachse aufweisen. Länglich wird dabei so verstanden, dass die Länge der Schiene einem Vielfachen der Breite der Schiene entspricht.

Die Schiene kann einen runden oder (mehr-)eckigen, vorzugsweise einen rechteckigen oder quadratischen Querschnitt aufweisen. Vorteilhaft an einem eckigen Querschnitt ist insbesondere, dass dieser in der Regel über einen gerade verlaufenden Abschnitt verfügt und somit über einen entsprechenden flächigen Bereich der Schiene besonders einfach mit dem Druckbehälter mechanisch verbunden werden kann.

Vorzugsweise weist die Fluid-Leitung nur eine Erstreckungsrichtung auf. Somit kann die Fluid-Leitung in der Schiene besonders einfach bereitgestellt werden, beispielsweise indem lediglich in eine Richtung in die Schiene zur Bereitstellung der Fluid-Leitung gebohrt wird.

Vorzugsweise weist das Druckbehältersystem ferner wenigstens eine mit dem wenigstens einen dritten Anschluss (fluidisch) verbundene und besonders bevorzugt durch die Schiene getragene Vorrichtung auf. Die Vorrichtung kann ein Ventil, insbesondere ein Ventil zum vorzugsweise linearen oder schlagartigen Abbau von in der Reaktionskammer herrschenden Druck, aufweisen. Durch die Ausbildung des Ventils zum schlagartigen Abbau von Druck kann das Ventil beispielsweise als Not-Ablassventil zur Anwendung kommen. Die Vorrichtung kann eine Druckmessvorrichtung (beispielsweise ein Manometer und/oder ein elektrischer Drucksensor) zum Erfassen von in der Reaktionskammer herrschenden Druck (insbesondere in einem Bereich von 0-400 bar) aufweisen. Die Vorrichtung kann eine Drucksicherung wie beispielsweise ein Berst-Ventil, insbesondere eine Berst-Membran, aufweisen, wobei die Drucksicherung vorzugsweise scheibenförmig ausgebildet ist. Die Drucksicherung stellt dabei insbesondere sicher, dass das Druckbehältersystem, insbesondere der Druckbehälter, nicht ungewollt wegen zu hoher Drücke beschädigt wird.

### 4. Beschreibung bevorzugter Ausführungsformen

Nachfolgend wird eine detaillierte Beschreibung der Figuren gegeben. In den Figuren zeigen:
- **Figur 1**: eine schematische Schnittansicht einer bevorzugten ersten Ausführungsform eines erfindungsgemäßen Druckbehältersystems;
- **Figur 2**: eine schematische Schnittansicht einer bevorzugten Weiterbildung der in Figur 1 gezeigten Ausführungsform, bei der der Deckel sich in der Schließstellung befindet;
- **Figur 3A**: eine schematische Schnittansicht der in Figur 2 gezeigten Ausführungsform, wobei der Deckel sich zwischen der Schließstellung und der Offenstellung befindet;
- **Figur 3B**: die in Figur 2 gezeigte Ausführungsform mit einer bevorzugten Ausgestaltung einer Sensorik zur Erkennung der Schließ- bzw. Offenstellung des Deckels;
- **Figur 4**: eine schematische Schnittansicht der in den Figuren 2 und 3A gezeigten Ausführungsform, wobei der Deckel sich in der Offenstellung befindet; und
- **Figur 5**: eine schematische Schnittansicht einer bevorzugten zweiten Ausführungsform eines erfindungsgemäßen Druckbehältersystems.

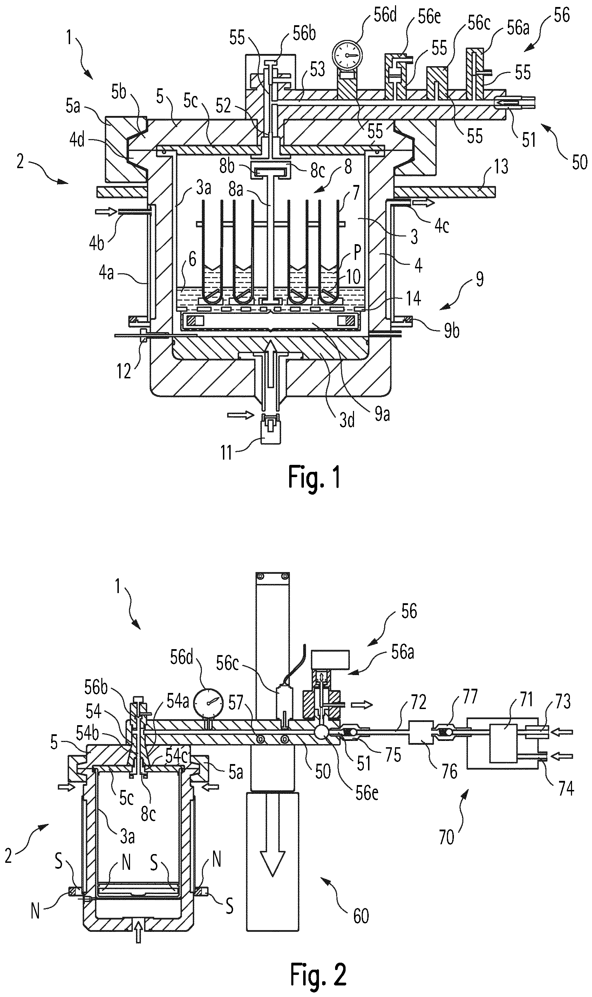

Die Figuren zeigen beispielhaft verschiedene Ausführungsformen eines erfindungsgemäßen Druckbehältersystems. Figur 1 zeigt beispielhaft eine erste Ausführungsform eines erfindungsgemäßen Druckbehältersystems 1. Das Druckbehältersystem 1 weist einen Druckbehälter 2 mit einer Reaktionskammer 3 als Druckraum zum Auslösen und/oder Fördern chemischer und/oder physikalischer Druckreaktionen von in der Reaktionskammer 3 aufgenommenen Proben P auf. Die Probe P weist beispielsweise Feststoffe (anorganisch und/oder organisch) wie Sand, Boden, Erde und/oder Blätter auf. Der Druckbehälter 2 ist jedoch nicht auf eine bestimmte Probe P beschränkt. Insbesondere können im Druckbehälter 2 jede Art von Proben einer Druckreaktion unterzogen werden, vor allem Proben mit hoher Viskosität bzw. vielen Feststoffanteilen.

Der Druckbehälter 2 kann ein (Hochdruck-) Autoklav sein. Der Druckbehälter 2 besteht vorzugsweise aus einem hochdruckfesten Werkstoff wie beispielsweise Metall, vorzugsweise Stahl, besonders vorzugsweise aus einer korrosionsbeständigen Edelstahl-Legierung. Der Druckbehälter 2 ist vorzugsweise derart ausgebildet, dass er bei Drücken bis zu wenigstens 200 bar, vorzugsweise bis zu wenigstens 500 bar, und/oder bei Temperaturen von bis zu und auch über 300 °C einsetzbar ist.

Der Druckbehälter 2 umgibt die Reaktionskammer 3 vorzugsweise an allen Seiten. Vorzugsweise weist der Druckbehälter 2 eine Drückbehälterwand 4 auf, die die Reaktionskammer 3 (vollständig) umlaufend umgibt und eine Öffnung definiert, über welche die Proben P zur Probebehandlung in die Reaktionskammer 3 einführbar und aus dieser wieder entnehmbar sind. Die Drückbehälterwand 4 bildet somit ein vorzugsweise topfförmig ausgebildetes Unterteil des Druckbehälters 2 (Druckkessel). Die Drückbehälterwand 4 ist vorzugsweise als Kühlmantel zum Kühlen der Reaktionskammer 3 ausgebildet, um beispielsweise eine konstante Temperatur zum Beheizen der Proben P zu halten. Vorzugsweise weist die Drückbehälterwand 4 wenigstens eine Kühlleitung 4a zur Kühlung mittels der Drückbehälterwand 4 auf. Die Leitung 4a weist vorzugsweise eine Kühlflüssigkeit zur Kühlung mittels der die Drückbehälterwand 4 auf. Die Kühlflüssigkeit wird in die Kühlleitung 4a vorzugsweise über einen Einlass 4b in die Leitung 4a eingeleitet und über einen Auslass 4c aus der Kühlleitung 4a ausgelassen. Vorzugsweise zirkuliert die Kühlflüssigkeit in der Kühlleitung 4a.

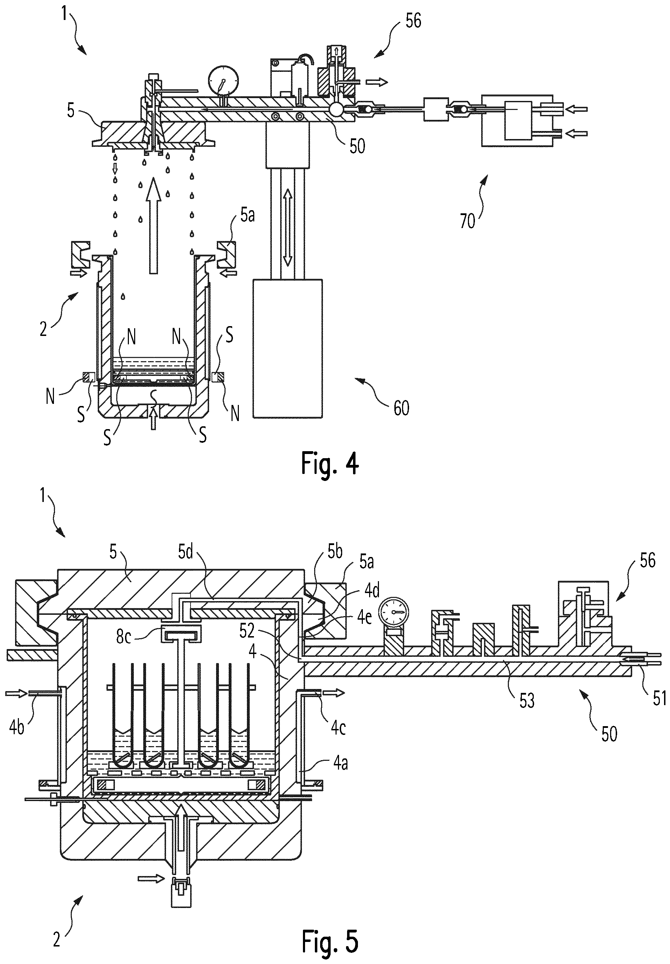

Der Druckbehälter 2 weist vorzugsweise einen Deckel 5 auf, welcher zwischen einer Offenstellung und einer Schließstellung bewegbar ist. In der Offenstellung ist die Reaktionskammer 3 geöffnet, insbesondere um über die vorgenannte, durch die Drückbehälterwand 4 gebildete Öffnung die Proben P in die Reaktionskammer 3 einzubringen bzw. aus dieser zu entnehmen. In der Offenstellung, die beispielhaft in der Figur 4 erkennbar ist, können die an dem Deckel 5 bzw. an dem weiter unten genauer beschriebenen Deckelteil 5c anhaftenden Kondensate (aggressive Chemikalien etc.), beispielsweise in der Form von Tropfen, in den Druckbehälter 2 bzw. die Reaktionskammer 3 fallen, ohne seitlich von der Reaktionskammer 3 befindliche Teile des Druckbehälters 2 oder des Druckbehältersystems 1 anzugreifen. In der Schließstellung ist die Reaktionskammer 3 geschlossen, um beispielsweise die Druckreaktion an den Proben P durchzuführen. Vorzugsweise weist der Druckbehälter 2 ein Schließelement 5a auf, das den Deckel 5 mit der Drückbehälterwand 4 in der Schließstellung verschließt. Das Schließelement 5a kann beispielsweise ausgebildet sein, den Deckel 5 in der Schließstellung dichtend auf die Drückbehälterwand 4 zu drücken. Vorzugsweise weisen Drückbehälterwand 4 und Deckel 5 jeweils einen Flanschbereich 4d bzw. 5b auf, die von dem Schließelement 5 in der Schließstellung umgriffen werden, um die Reaktionskammer 3 durch den Deckel 5, beispielsweise indem der Deckel 5 gegen die Drückbehälterwand 4 gedrückt wird, zu schließen. Das Schließelement 5a ist beispielsweise als Klammer ausgebildet, die vorzugsweise zwei Klammerhälften aufweist, die zueinander zum Öffnen und Schließen der Klammer bewegbar sind, um die Klammer von dem Druckbehälter 2 abzunehmen (Offenstellung) bzw. an den Druckbehälter 2 vorzusehen (Schließstellung).

Der Druckbehälter 2 bzw. die Reaktionskammer 3 ist vorzugsweise ausgebildet, eine Flüssigkeit bzw. Grundlast 6 aufzunehmen. Die Flüssigkeit 6 ist vorzugsweise eine stark mikrowellenabsorbierende Flüssigkeit. Die Flüssigkeit 6 ist insbesondere vorgesehen, um die in dem Druckbehälter 2 bzw. in der Reaktionskammer 3 befindlichen Proben P zu beheizen bzw. zu erwärmen. Dies kann beispielsweise erfolgen, indem die jeweilige Probe P von der Flüssigkeit 6 wenigstens teilweise umgeben ist und ein nicht näher dargestellter Mikrowellengenerator (Magnetron etc.) die Flüssigkeit 6 durch Mikrowellenabsorption erwärmt. Über die Flüssigkeit 6 können die Proben P also indirekt beheizt bzw. erwärmt werden. Alternativ oder zusätzlich können auch andere Heizquellen zum Erhitzen bzw. Erwärmen der Flüssigkeit 6 bzw. Proben P zur Anwendung kommen. Anstatt der indirekten Beheizung bzw. Erwärmung der Proben P können diese mittels der genannten Heizquellen auch direkt beheizt bzw. erwärmt werden, also ohne die Flüssigkeit 6.

Die Probe P kann in einem Probenbehälter 7, beispielsweise in einem Reagenzglas, vorgesehen sein. Vorzugsweise ist der Druckbehälter 2 bzw. die Reaktionskammer 3 ausgebildet wenigstens zwei Proben P bzw. Probenbehälter 7 aufzunehmen. Der Druckbehälter 2 kann ferner eine Probenhalterung 8 aufweisen, mit welcher der Probenbehälter 7 in der Reaktionskammer 3 gehalten werden kann. Die Probenhalterung 8 trägt den wenigstens einen Probenbehälter 7 vorzugsweise derart, dass der Probenbehälter 7 und somit die Probe P sich in der Flüssigkeit 6 befindet. Die Probenhalterung 8 weist vorzugsweise eine Haltevorrichtung 8a auf, über welche die Probenhalterung 8 mit dem Druckbehälter 2 mechanisch verbunden werden kann. Beispielsweise ist die Haltevorrichtung 8a ausgebildet, mit dem Deckel 5 mechanisch verbunden zu werden, beispielsweise an der der Reaktionskammer 3 zugewandten Seite des Deckels 5. Die Haltevorrichtung 8a kann ein kraft- und/oder formschlüssiges Befestigungsmittel zur Befestigung der Probehalterung 8 an den Druckbehälter 2, also insbesondere an den Deckel 5, aufweisen. Vorzugsweise ist dieses Befestigungsmittel ausgebildet, die Probenhalterung 8 über eine korrespondierende Verbindung mit dem Druckbehälter 2 mechanisch zu verbinden. Beispielsweise weist die Haltevorrichtung 8a ein Einhängemittel 8b auf, welches in ein korrespondierend ausgesstaltetes Aufnahmemittel 8c auf Seiten des Druckbehälters 2, insbesondere auf Seiten des Deckels 5, eingehängt werden kann, um die Probenhalterung 8 bestimmungsgemäß vorzusehen. Das Einhängemittel 8b ist vorzugsweise als Gleit-und/oder Linearführung, besonders bevorzugt als sogenannte Schwalbenschwanz-Führung, ausgebildet.

Der Druckbehälter 2 kann ferner eine Rührvorrichtung 9 zum Rühren der Flüssigkeit 6 aufweisen. Mittels der Rührvorrichtung 9 kann eine homogene Durchmischung und folglich eine homogene Temperaturverteilung und ein effizientes Beheizen der in der Reaktionskammer 3 aufgenommenen Flüssigkeit 6 erfolgen. Somit werden auch die Proben P effizienter beheizt. Vorzugsweise weist die Rührvorrichtung 9 ein um eine Rotationsachse, beispielsweise die Druckbehälter- oder die Kesselachse, drehbares Rührmittel 9a auf, das in der Flüssigkeit 6 zum Rühren der Flüssigkeit 6 vorgesehen ist. Das Rührmittel 9a wird vorzugsweise über ein Antriebselement 9b angetrieben. Beispielsweise kann das Rührmittel 9a als Magnetscheibe ausgebildet sein und/oder Magnetelemente (Festmagnete, Magnetstäbe etc.) aufweisen. Die Magnetelemente können beispielsweise in dem Rührmittel 9a aufgenommen sein. Auf diese Weise nimmt das Rührmittel 9a die Magnetelemente mit, sodass die sich um die Rotationsachse rotierenden Magnetelemente auch das Rührmittel 9a um die Rotationsachse drehen. Das Rührmittel 9a ist vorzugsweise aus einem hochresistenten Material wie Kunststoff (PTFE etc.) hergestellt ist. Besonders bevorzugt ist, wenn die Magnetelemente in dem hochresistenten Material (dicht) verschweißt sind.

Das Antriebselement 9b kann ausgebildet sein, mit dem magnetischen Rührmittel 9a derart magnetisch zusammenwirken, dass das Rührmittel 9a in Rotation um die Rotationsachse versetzt wird, um somit die Flüssigkeit 5 zu rühren. Vorzugsweise weist das Antriebselement 9b Magnete (Festmagnete etc.) auf, um mit dem Rührmittel 9a zum Rühren der Flüssigkeit 6 zusammenzuwirken. Das Antriebselement 9b bewirkt somit bevorzugt ein sich um die vorgenannte Rotationsachse drehendes Magnetfeld, wodurch das magnetische Rührmittel 9a durch das magnetische Zusammenwirken mit dem drehenden Magnetfeld ebenfalls in Rotation um die Rotationsachse versetzt wird. Beispielsweise weist sind die Magnete des Antriebselements 9b in einer relativ zum Druckbehälter 2 und um die Rotationsachse drehbaren Aufnahme, beispielsweise einer Drehscheibe, vorgesehen, um das rotierende Magnetfeld mittels der drehenden Aufnahme zu bewirken. Die drehbare Aufnahme kann auf einer korrespondierend ausgestalteten Drehlagerung drehbar gelagert sein. Das Antriebselement 9b ist vorzugsweise außerhalb und/oder seitlich der Reaktionskammer 3, besonders bevorzugt außerhalb und/oder seitlich der Druckbehälterwand 4, vorgesehen.

Die jeweilige Probenbehälter 7 kann einen Rührmagneten 10 zum Rühren der in dem Probenbehälter 7 aufgenommenen Probe P aufweisen. Der Rührmagnet 10 ist vorzugsweise länglich, besonders bevorzugt als Rührfischchen ausgebildet. Der Rührmagnet 10 ist vorzugsweise so vorgesehen, dass der Rührmagnet 10 durch das rotierende Magnetfeld des magnetischen Rührmittels 9a und/oder durch das magnetisch antreibende Antriebselement 9b in Bewegung versetzt wird, um die Probe P zu rühren. Wird die Probe P mit dem Rührmagnet 10 gerührt, so können insbesondere Proben mit hoher Viskosität bzw. vielen Feststoffanteilen effizient homogenisiert werden.

Der Druckbehälter 2 weist vorzugsweise eine flüssigkeitsdurchlässige Platte 14, insbesondere eine Lochplatte, auf, welche in der Flüssigkeit 6 vorgesehen ist und mit der Reaktionskammer 3 einen Raum definiert, in dem das Rührmittel 9a aufgenommen ist. Die Platte 14 ist vorzugsweise aus einem mikrowellenabsorbierenden Material wie beispielsweise SiC und/oder Keramik hergestellt, um somit über Mikrowellenstrahlung erhitzt zu werden und folglich die Flüssigkeit 6 (indirekt) zu erwärmen bzw. erhitzen. Auf diese Weise wird die Flüssigkeit 6 und folglich auch die jeweilige Probe P effizient erhitzt.

Der Druckbehälter 2 kann einen Innenbehälter 3a aufweisen, der die Reaktionskammer 3 oder wenigstens ein Unterteil der Reaktionskammer 3 bildet. Der Innenbehälter 3a liegt vorzugsweise auf einer im Druckbehälter 2 vorgesehenen Auflage 3b auf. Der Innenbehälter 3a ist vorzugsweise aus einem inerten Material hergestellt, beispielsweise aus Kunststoff, insbesondere PTFE. Die Auflage 3b ist vorzugsweise als Dichtungselement gestaltet, um den Bodenbereich des Druckbehälters 2 nach außen abzudichten. Die Auflage 3b ist vorzugsweise druckfest ausgebildet. Die Auflage 3b ist vorzugsweise aus Kunststoff, insbesondere PTFE, Quarz, Saphir und/oder Calciumfluorid hergestellt.

Der Druckbehälter 2 weist vorzugsweise auf Seiten des Deckels 5 bzw. auf der Seite des Deckels 5, die der Reaktionskammer 3 zugewandt ist, ein Deckelteil 5c auf, das den Innenbehälter 3a, insbesondere dessen Öffnung, in der Schließstellung des Deckels 5 (dichtend) abschließt. Vorzugsweise weist das Deckelteil 5c einen umlaufenden, insbesondere ringförmigen Rand auf, der sich in Richtung der Reaktionskammer 3 erstreckt. Wie in Figur 4 gut erkennbar, bewirkt dieser Rand insbesondere, dass die an dem Deckelteil 5c anhaftenden Kondensate nur in die Reaktionskammer 3 fallen, also nicht seitlich über die Reaktionskammer 3 hinauslaufen. Somit wird durch den Rand ein sicheres Abtropfen des Kondensats bewirkt, wodurch die Sicherheit des Druckbehältersystems 1 verbessert ist. Alternativ oder zusätzlich zu einem solchen Rand ist es auch denkbar, die der Reaktionskammer 3 zugewandte Seite des Deckelteils 5c in Richtung der Reaktionskammer 3 verjüngend auszugestalten, beispielsweise (stumpf-)kegelförmig, um ein sicheres Abtropfen der Kondensate des Deckelteils 5c in die Reaktionskammer 3 zu bezwecken. Das Deckelteil 5c ist vorzugsweise aus Kunststoff, insbesondere PTFE, hergestellt.

Der Druckbehälter 2 kann eine Temperaturmesseinrichtung 11 zum Messen bzw. Erfassen der Temperatur der Proben P aufweisen. Beispielsweise weist die Temperaturmesseinrichtung 11 einen Infrarot-Temperatursensor zum Erfassen der Temperatur der Proben P auf. Die Temperaturmesseinrichtung 11 ist vorzugsweise auf Seiten eines Unterteils bzw. Bodenbereichs des Druckbehälters 2 vorgesehen. Die Temperaturmesseinrichtung 11 ist vorzugsweise unterhalb des Bodenbereichs und/oder in dem Bodenbereich des Druckbehälters 2 ausgebildet. Der Druckbehälter 2 kann ferner eine (weitere) Temperaturmesseinrichtung 12 zum Messen bzw. Erfassen der Temperatur, die unterhalb des Bodens der Reaktionskammer 3, vorzugsweise (direkt) unterhalb des (Bodens des) Innenbehälters 3a herrscht, aufweisen. Die Temperaturmesseinrichtung 12 weist vorzugsweise ein Thermoelement zum Messen der vorgenannten Temperatur auf, wobei das Thermoelement vorzugsweise seitlich in die Drückbehälterwand 4 eingeführt ist.

Das Druckbehältersystem 1 kann eine Platte 13 aufweisen, in der der Druckbehälter 2 so aufgenommen ist, dass auf Seiten einer Vorderseite der Platte 13 der Deckel 5 bzw. der Zugang zur Reaktionskammer 3 vorgesehen ist und auf Seiten einer Rückseite der Platte 13 die wesentlichen Komponenten zum Betrieb des Druckbehälters 2 bzw. des Druckbehältersystems 1 (elektrische, elektronische und/oder mechanische Komponenten etc., insbesondere die Kühlleitungen 4a, das Antriebselement 9b und/oder die Temperaturmesseinrichtung(en) 11 und/oder 12) vorgesehen sind. Somit sind diese wesentlichen Komponenten elektrisch und mechanisch von der Vorderseite des Platte 13 effizient abgeschirmt, insbesondere abgedichtet.

Das Druckbehältersystem 1 weist ferner eine starre Schiene 50 auf, die starr mit wenigstens einem Teil des Druckbehälters 2 bzw. mit dem Druckbehälter 2 verbunden ist. Die Schiene 50 ist vorzugsweise länglich ausgebildet, weist also vorzugsweise eine Längsachse auf, die in dem in den Figuren beispielhaft gezeigten Druckbehältersystem 1 bevorzugt in der Horizontalen verläuft. Die Längsachse kann jedoch auch in der Vertikalen verlaufen oder in einer Achse schräg zur Horizontalen.

In der in den Figuren 1 bis 4 gezeigten bevorzugten ersten Ausführungsform des Druckbehältersystem 1 ist die starre Schiene 50 starr mit dem Deckel 5 als Teil des Druckbehälters 2 - also mit dem Druckbehälter 2 - verbunden. Die Schiene 50 weist einen ersten Anschluss 51 zum Fluid-Einlass und einen zweiten Anschluss 52 zum Fluid-Auslass auf. Ferner weist die Schiene 50 eine Fluid-Leitung 53 auf, die den ersten Anschluss 51 mit dem zweiten Anschluss 52 fluidisch verbindet. Die Fluid-Leitung 53 ist hier durch einen Hohlraum - bspw. eine Bohrung (wenn im Rahmen der Erfindung von "Bohrung" die Rede ist, ist hierunter in der Regel jedwede im Grunde vergleichbare (Durchgangs- )Öffnung zu verstehen) - in der starren Schiene 50 gebildet, wobei dieser Hohlraum sämtliche Anschlüsse 51, 52, 55 miteinander (fluidisch) verbindet und somit die die Anschlüsse verbindende Fluid-Leitung 53 bildet. Die Fluid-Leitung 53 bzw. der Hohlraum ist folglich mit bzw. in der starren Schiene 50 integral bereitgestellt. Über den zweiten Anschluss 52 ist die Fluid-Leitung 53 mit der Reaktionskammer 3 fluidisch verbunden. In dem in den Figuren 1 bis 4 dargestellten bevorzugten Druckbehältersystem 1 ist der zweite Anschluss 52 demnach auf Seiten des Deckels 5 vorgesehen, also so, dass das aus dem zweiten Anschluss 52 strömende Fluid über den Deckel 5 in die Reaktionskammer 3 ausströmt. In entsprechender Weise kann auch ein Fluid aus der Reaktionskammer 3 über den Deckel 5 und den zweiten Anschluss 52 in die Fluid-Leitung 53 eingelassen werden.

Wie insbesondere die Figuren 2 bis 4 erkennen lassen, kann zur Befestigung der Schiene 50 an den Deckel 5 ein Befestigungsmittel 54 vorgesehen sein, um somit insbesondere die starre Verbindung zwischen Deckel 5 und Schiene 50 bereitzustellen. Das Befestigungsmittel 54 kann ausgebildet sein, die Schiene 50 über Kraftschluss und/oder Formschluss an den Deckel 5 zu befestigen. Vorzugsweise wird das Befestigungsmittel 54 von einer Seite des Deckels 5, die der Reaktionskammer 3 zugewandt ist - also von einer Innenseite des Deckels 5 -, durch den Deckel 5 geführt, um auf einer Seite des Deckels 5, die der Reaktionskammer 3 abgewandt ist - also auf einer Außenseite des Deckels 5 -, mit der Schiene 50 in Verbindung gebracht, um somit die Schiene 50 an den Deckel 5 zu befestigen. Bevorzugt ist, wenn das Befestigungsmittel 54 ausgebildet ist, die Schiene 50 gegen den Deckel 5 zu drücken, um somit die Schiene 50 starr (mechanisch) mit dem Deckel 5 zu verbinden bzw. an diesen zu befestigen. Dies kann beispielsweise erfolgen, indem das Befestigungsmittel 54 so vorgesehen ist, dass das Befestigungsmittel 54 die Schiene 50 in Richtung der Reaktionskammer 3 zieht und somit gegen den Deckel 5 drückt. Das Befestigungsmittel 54 weist vorzugsweise eine (kegelförmige) Mantelfläche 54a auf, die beim Befestigen der Schiene 50 an den Deckel 5 in Form- und/oder Kraftschluss mit dem Deckel 5 kommt. Über diese Mantelfläche 54a kann eine Gegenkraft zum Befestigen der Schiene 50 an den Deckel 5 bewirkt werden, sodass der Deckel 5 zwischen Schiene 50 und Befestigungsmittel 54 bzw. dessen Mantelfläche 54a geklemmt ist.

Für eine besonders kompakte Anordnung ist die Fluid-Leitung 53 vorzugsweise über den zweiten Anschluss 52 und das Befestigungsmittel 54 mit der Reaktionskammer 3 fluidisch verbunden. Beispielsweise weist das Befestigungsmittel 54 eine durch das Befestigungsmittel 54 verlaufende Durchgangsbohrung 54b auf, über welche eine fluidische Verbindung zwischen Reaktionskammer 3 und zweiten Anschluss 52 bzw. Fluid-Leitung 53 bereitstellbar ist. Die Durchgangsbohrung 54b ist vorzugsweise mittig in dem Befestigungsmittel 54 ausgebildet, also beispielsweise fluchtend mit der Symmetrieachse des Befestigungsmittels 54.

Das Befestigungsmittel 54 kann ferner einen Befestigungsbereich 54c aufweisen, über welchen die Probenhalterung 8, insbesondere deren Haltevorrichtung 8a bzw. Aufnahmemittel 8c, an das Befestigungsmittel 54 und somit den Deckel 5 befestigt werden kann. Vorzugsweise wird durch Befestigung der Haltervorrichtung 8a bzw. des Aufnahmemittels 8c an den Deckel 5 gleichzeitig das Deckelteil 5c an dem Deckel 5 befestigt, vorzugsweise indem die Haltervorrichtung 8a bzw. das Aufnahmemittel 8c das Deckelteil 5c gegen den Deckel 5 drückt. Durch die Haltevorrichtung 8a bzw. das Aufnahmemittel 8c wird das Deckelteil 5c vorzugsweise in einer definierten Stellung bzw. Position bzgl. des Deckels 5 fixiert. Die Befestigung des Deckelteils 5c an den Deckel 5 mittels der Haltevorrichtung 8a bzw. des Aufnahmemittels 8c kann beispielsweise über Kraft- und/oder Formschluss erfolgen, beispielsweise mittels einer korrespondierenden Verbindung (Schnappverbindung etc.) und/oder einer Schraubverbindung. Ist die Probenhaltung 8 über die Haltevorrichtung 8a bzw. das Aufnahmemittel 8c mit dem Befestigungsmittel 54 mechanisch verbunden, so kann vorgesehen sein, dass die Durchgangsbohrung 54b über die Haltevorrichtung 8a bzw. das Aufnahmemittel 8c mit der Reaktionskammer 3 fluidisch verbunden ist, vorzugsweise über eine durch das Aufnahmemittel 8c verlaufende Bohrung, insbesondere eine Durchgangsbohrung. Letztgenannte Durchgangsbohrung ist vorzugsweise verzweigt ausgebildet, beispielsweise mit einem Eingang und zwei in die Reaktionskammer 3 mündenden Ausgängen (vgl. Figur 1), um ein aus dem zweiten Anschluss 52 austretendes Fluid gleichmäßig in die Reaktionskammer 3 abzugeben.

Die Fluid-Leitung 53 erstreckt sich vorzugsweise entlang der Längsachse der Schiene 50. Beispielsweise hat die Fluid-Leitung 53 nur eine Erstreckungsrichtung, erstreckt sich also vorzugsweise nur gerade, zum Beispiel nur entlang der Längsachse der Schiene 50. Die Fluid-Leitung 53 weist vorzugsweise ein erstes Ende und ein zweites Ende auf, wobei das erste Ende der Fluid-Leitung 53 den ersten Anschluss 51 aufweist, und wobei das zweite Ende den zweiten Anschluss 52 aufweist.

Die Schiene 50 weist ferner wenigstens einen dritten Anschluss 55 auf, der mit der Fluid-Leitung 53 fluidisch verbunden ist, also in diese mündet. Der dritte Anschluss 55 ist vorzugsweise an einer beliebigen Stelle entlang der Längsachse der Schiene 50 vorgesehen. Beispielsweise kann bei Blick senkrecht zur Längsachse der Schiene 50 gesehen der dritte Anschluss 55 zwischen dem ersten Anschluss 51 und dem zweiten Anschluss 52 vorgesehen sein oder deckungsgleich mit dem ersten Anschluss 51 oder dem zweiten Anschluss 52.

Über den wenigstens einen dritten Anschluss 55 kann wenigstens eine Vorrichtung 56 mit der Fluid-Leitung 53 fluidisch verbunden werden, sodass die Vorrichtung 56 mit der Fluid-Leitung 53 und somit mit der Reaktionskammer 3 fluidisch verbunden ist. Vorteilhaft hierbei ist, dass für eine Vorrichtung 56 nur ein dritter Anschluss 55 notwendig ist, der optimal mit entsprechenden Dichtungselementen (Dichtringe etc.) optimal abgedichtet werden kann. Die Vorrichtung 56 kann beispielsweise Funktionen aufweisen, für welche eine fluidische Verbindung zu der Reaktionskammer 3 notwendig ist, beispielsweise um bestimmte Werte der Reaktionskammer 3 zu messen und/oder zu ändern. Auf bevorzugte Vorrichtungen 56 wird weiter unten noch genauer eingegangen.

Vorzugsweise weist die Schiene 50 wenigstens zwei, drei, vier, fünf, sechs oder auch mehr dritte Anschlüsse 55 auf, um somit eine entsprechende Anzahl an Vorrichtungen 56 mit der Fluid-Leitung 53 fluidisch zu verbinden. Die wenigstens zwei bzw. mehreren dritten Anschlüsse 55 sind vorzugsweise entlang der Längsachse der Schiene 50 verteilt angeordnet. Vorzugsweise sind die wenigstens zwei Anschlüsse 55 auf derselben Seite mit Bezug zum Druckbehälter 2 vorgesehen, besonders bevorzugt auf einer dem Druckbehälter 2 abgewandten Seite, also in dem in den Figuren 1 bis 4 beispielhaft gezeigten Druckbehältersystem 1 oberhalb des Druckbehälters 2 bzw. des Deckels 5. Benachbarte dritte Anschlüsse 55 können voneinander mit gleichen Abständen beabstandet sein, aber auch unterschiedliche Abstände zueinander aufweisen.

Der wenigstens eine dritte Anschluss 55 (bzw. jeder der wenigstens zwei dritten Anschlüsse 55) ist vorzugsweise integral mit der Schiene 50 ausgebildet. Der wenigstens eine dritte Anschluss 55 kann eine Befestigungsstruktur wie beispielsweise eine Bohrung, insbesondere eine Durchgangsbohrung, aufweisen, über welche die jeweilige Vorrichtung 56 an die Schiene 50 befestigt werden kann. Vorzugsweise erfolgt über diese Befestigungsstruktur bzw. Bohrung auch die fluidische Verbindung zwischen der jeweiligen Vorrichtung 56 und Fluid-Leitung 53. Die Bohrung weist vorzugsweise einen Befestigungsbereich auf, der insbesondere der jeweiligen Vorrichtung 56 entspricht, beispielsweise indem dieser Befestigungsbereich ein Gewinde und/oder eine Schnappverbindung aufweist. Über diesen Befestigungsbereich kann folglich die jeweilige Vorrichtung 56 an den dritten Anschluss 55 und somit die Schiene 50 befestigt werden, beispielsweise über eine kraft- und/oder formschlüssige Verbindung.

Der wenigstens eine dritte Anschluss 55 ist vorzugsweis ausgebildet, die jeweilige Vorrichtung 56 in einer Montagerichtung mit der Schiene 50 zu verbinden, wobei die Montagerichtung im Wesentlichen senkrecht zu einer Strömungsrichtung der Fluid-Leitung 53 ist. In dem in den Figuren gezeigten Ausführungsbeispiel des Druckbehältersystems 1 verläuft die Montagerichtung senkrecht zur Längsachse der Schiene 50, also insbesondere in der Vertikalen. Die Montagerichtung ist vorzugsweise die Erstreckungsrichtung der vorgenannten Bohrung; d. h., die Bohrung legt vorzugsweise die Montagerichtung fest.

Die wenigstens eine mit dem wenigstens einen dritten Anschluss 55 fluidisch verbundene Vorrichtung 56 kann ein Ventil sein. Dieses Ventil kann vorgesehen sein, um einen in der Reaktionskammer 3 herrschenden Druck abzubauen. Beispielsweise ist das Ventil ein Ventil 56a zum vorzugsweise linearen Abbau von in der Reaktionskammer 3 herrschenden Druck (also zum wahlweisen Druckentlasten oder Verschließen), beispielsweise ausgestaltet als ein elektrisches und/oder elektrisch steuerbares Ventil 56a mit automatischem Druckablass. Das Ventil 56a weist vorzugsweise ein Stellelement, insbesondere einen Stell- und Regelmotor, auf, um das Ventil 56a wahlweise zu schließen oder für eine Druckentlastung zu öffnen. Das Ventil kann auch ein Ventil 56b zum vorzugsweise schlagartigen Abbau von in der Reaktionskammer 3 herrschenden Druck sein, beispielsweise in der Ausgestaltung eines Not-Ablassventils. Das Ventil 56b bzw. dessen dritter Anschluss 55 ist vorzugsweise so vorgesehen, dass in einer Draufsicht des Druckbehälters 2 gesehen - also bei Blick auf die von der Reaktionskammer 3 abgewandte Seite des Deckels 5 - das Ventil 56b im Wesentlichen deckungsgleich mit dem zweiten Anschluss 52 ist. Auf diese Weise kann eine besonders gute bzw. kurze fluidische Verbindung zwischen Ventil 56b und zweitem Anschluss 52 bzw. Reaktionskammer 3 bereitgestellt werden, um somit besonders effektiv bzw. schnell den in der Reaktionskammer 3 herrschenden Druck abzubauen bzw. mit dem Umgebungsdruck des Druckbehälters 2 auszugleichen.

Die Vorrichtung 56 kann auch eine Druckmessvorrichtung aufweisen, die dazu ausgelegt ist, den in der Reaktionskammer 3 herrschenden Druck zu erfassen. Die Druckmessvorrichtung weist beispielsweise eine elektrische, vorzugsweise piezoelektrische Druckmessvorrichtung 56c auf, die bevorzugt über eine digitale Anzeige den entsprechenden Druck anzeigen kann und/oder den Druck in digitaler Form, beispielsweise zur Steuerung und/oder Regelung des Drucks in der Reaktionskammer 3, weiterleiten kann. Alternativ oder zusätzlich kann die Druckmessvorrichtung eine analoge Druckmessvorrichtung 56d aufweisen, die den entsprechenden Druck in Form einer analogen bzw. direkten Druckanzeige anzeigt, beispielsweise in der Ausgestaltung eines Manometers.

Die Vorrichtung 56 kann auch eine Drucksicherung 56e aufweisen, die dazu ausgelegt ist, dass ein bestimmter Druck in der Reaktionskammer 3, der den Druckbehälter 2 beschädigen könnte, nicht überschritten wird. Vorzugsweise ist die Drucksicherung 56e als ein Berst-Ventil, insbesondere als eine Berst-Membran ausgestaltet und/oder weist die Form einer Scheibe auf. Die Drucksicherung 56e ist vorzugsweise eingerichtet bei einem Druck von ca. 200 bar zu öffnen. In einem Ausführungsbeispiel kann die Drucksicherung 56e auch in der Fluid-Leitung 53 oder in unmittelbarer Nähre der Fluid-Leitung 53 vorgesehen sein, beispielsweise in direkter fluidischer Verbindung mit dem dritten Anschluss 55 des Ventils 56a und/oder mit dem ersten Anschluss 51 (vgl. Figur 2).

Vorzugsweise weist das Druckbehältersystem 1 ein nicht näher dargestelltes Reservoir auf, in das die von Ventil 56a, Ventil 56b und/oder Drucksicherung 56e entweichenden Fluid (wegen der Druckentlastung) entweichen können. Das Reservoir verfügt über ein großes Puffervolumen, um somit den Druckimpuls bei Druckentlastung abzudämpfen, sodass der Druckbehälter 2 geschont wird. Das Reservoir kann über entsprechende fluidische Leitungen, beispielsweise über einen druckfesten Schlauch, mit dem Ventil 56a, Ventil 56b und/oder der Drucksicherung 56e fluidisch verbunden sein.

Die Figuren 1 bis 4 lassen eine bevorzugte Ausgestaltung des Druckbehältersystem 1 erkennen, in der die Schiene 50 derart gestaltet und mit dem Deckel 5 (mechanisch) verbunden ist, dass durch Bewegen, vorzugsweise durch Heben und Senken, der Schiene 50, vorzugsweise samt der wenigstens einen Vorrichtung 56, der Deckel 5 zwischen der Offenstellung (vgl. Figur 4) und der Schließstellung (vgl. Figur 2) bewegt werden kann. Bevorzugt ist, wenn eine Bewegung der Schiene 50, die senkrecht zur Längsachse der Schiene 50 ist, die vorgenannte Bewegung des Deckels 5 zwischen der Offenstellung und der Schließstellung bewirkt, also in den Figuren 1 bis 4 eine vertikale Bewegung (von unten nach oben bzw. von oben nach unten) der Schiene 50.

Die Bewegung der Schiene 50 zum Bewegen des Deckels 5 zwischen der Offenstellung und der Schließstellung kann manuell und/oder maschinell und/oder automatisch erfolgen. Bevorzugt erfolgt die Bewegung der Schiene 50 zum Bewegen des Deckels 5 zwischen der Offenstellung und der Schließstellung maschinell, beispielsweise mittels einer Fördervorrichtung 60, vorzugsweise mittels einer wie in den Figuren 2 bis 4 beispielhaft dargestellten Hebe- und Senkvorrichtung bzw. Lift. Wie in den Figuren 2 bis 4 jeweils durch einen Pfeil bzw. Doppelpfeil angedeutet, ist es bevorzugt, wenn die Fördervorrichtung 60 eine Linearbewegung auf die Schiene 50 überträgt, damit diese den Deckel 5 zwischen der Offenstellung und der Schließstellung bewegen kann. Die Linearbewegung der Fördervorrichtung 60 wird vorzugsweise durch lineare Führungselemente wie beispielsweise ein Schubgelenk, vorzugsweise ein entlang einer Lift-Stange bewegbarer Lift-Schlitten, bereitgestellt. Die Bewegungsrichtung der linearen Bewegung der Fördervorrichtung 60 ist dabei bevorzugt senkrecht zur Längsachse der Schiene 50 vorgesehen, verläuft also bevorzugt in der Vertikalen. Die Fördervorrichtung 60 weist vorzugsweise eine entsprechende Antriebseinheit, beispielsweise einen elektrischen Motor, auf, über welche die Bewegung, also insbesondere die lineare Bewegung, zum Bewegen des Deckels 5 zwischen der Offenstellung und der Schließstellung bewirkt werden kann.

Die Fördervorrichtung 60 ist vorzugsweise seitlich neben dem Druckbehälter 2 vorgesehen. Die Fördervorrichtung 60 kann jedoch auch bzgl. des Druckbehälters 2 in anderen Position vorgesehen sein, in denen die Fördervorrichtung 60 mittels der Schiene 50 den Deckel 5 wie zuvor beschrieben bewegen kann. Zur Befestigung der Schiene 50 an die Fördervorrichtung 60 kann die Schiene 50 einen Befestigungsbereich 57 aufweisen. Über den Befestigungsbereich 57 kann die Schiene 50 mittels Kraft- und/oder Formschluss an die Fördervorrichtung 60 befestigt werden. Beispielsweise ist der Befestigungsbereich 57 korrespondierend zu einem entsprechenden Befestigungsbereich der Fördervorrichtung 60 ausgebildet. Es können Befestigungsmittel vorgesehen sein, welche den Befestigungsbereich 57 und somit die Schiene 50 an die Fördervorrichtung 60 befestigen. Geeignete Befestigungsmittel sind insbesondere Schrauben oder dergleichen.

Das Druckbehältersystem 1 weist vorzugsweise eine nicht näher dargestellte Steuervorrichtung auf, die vorzugsweise eingerichtet ist, die mit der Schiene 50 fluidisch verbundenen Vorrichtungen 56 (insbesondere Ventile, (Druck- )Messeinrichtungen etc.) und/oder die Bewegung der Schiene 50 zum Bewegen des Deckels 5 zwischen der Offenstellung und der Schließstellung, also insbesondere die Fördervorrichtung 60, zu steuern. Die Steuervorrichtung kann auch eingerichtet sein, das Schließelement 5a zu öffnen und zu schließen. Beispielsweise kann die Steuervorrichtung eingerichtet sein, zunächst das Schließelement 5a zu öffnen und anschließend die Fördervorrichtung 60 so anzusteuern, dass der Deckel 5 aus der Schließstellung in Richtung bzw. in die Offenstellung bewegt wird. In entsprechender Weise kann die Steuervorrichtung eingerichtet sein, (direkt) nach dem die Fördervorrichtung 60 den Deckel 5 in die Schließstellung bewegt hat, das Schließelement 5a wieder zu schließen, sodass beispielsweise im Anschluss eine Druckreaktion in der Reaktionskammer 3 durchgeführt werden kann.

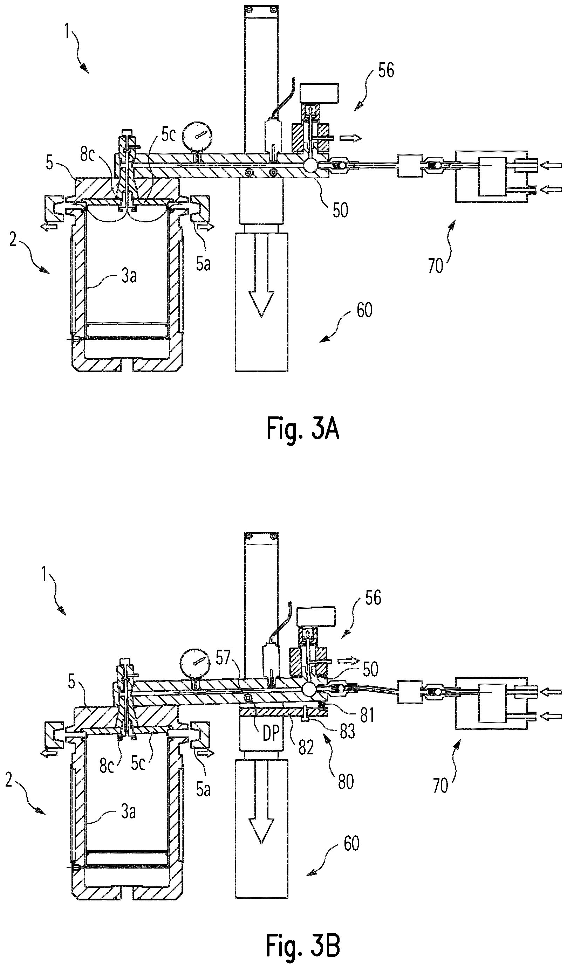

Figur 3B zeigt eine besonders bevorzugte Ausführungsform des Druckbehältersystems 1, bei der die Schiene 50 relativ zur Fördervorrichtung 60 - also insbesondere relativ zu einem die Schiene 50 zwischen der Offenstellung und Schließstellung bewegenden Teil der Fördervorrichtung 60 wie beispielsweise die oben genannten linearen Führungselemente der Fördervorrichtung- und bzgl. einer Achse (translatorische Achse, Neige- bzw. Drehachse etc.) bewegbar, insbesondere neigbar ist, beispielsweise um einen Drehpunkt DP. Das Druckbehältersystem 1 weist dann ferner eine Sensorik 80 auf, welche eingerichtet ist, die Schließstellung des Deckels 5 auf Basis einer durch die vorgenannte Bewegbarkeit bzw. Neigbarkeit der Schiene 50 ermöglichte Relativbewegung, insbesondere Neigebewegung, der Schiene 50 relativ zur Fördervorrichtung 60 und bzgl. der Achse zu erkennen, wobei die Relativbewegung durch Bewegen des Deckels 5 in die Schließstellung bewirkt wird. Diese Relativbewegung kann beispielsweise durch eine in der Sensorik 80 integrierte Näherungssensorik (Abstandssensor, Näherungssensor, Näherungsschalter etc.) und/oder das im Folgenden noch näher beschriebene elastische Element 81 erkannt werden.

So kann beispielsweise vorgesehen sein, dass die Schiene 50 in der noch nicht erreichten Schließstellung bzw. in der Offenstellung bzgl. der Horizontalen bzw. Vertikalen geneigt ist (beispielsweise um einen kleinen Winkel, insbesondere im Bereich von 1° bis 5°, vgl. Figur 3B), und sobald der Deckel 5 in die Schließstellung gelangt, der Deckel 5 durch Auflage auf der zu verschließenden Öffnung die Schiene 50 um die Neigeachse dreht und somit die Sensorik 80 zumindest aufgrund dieser Drehung bzw. Neigebewegung die Schließstellung erkennt. Während dieser Bewegung des Deckels 50 in die Schließstellung setzt der Deckel 50 folglich zunächst auf einen ersten Abschnitt des die zu verschließende Öffnung definierenden Rands der Druckbehälterwandung 4 auf (in Figur 3B auf den linksäußeren Rand der Druckbehälterwandung 4), sodass der Deckel 50 im Anschluss plan bzw. komplett auf dem die zu verschließende Öffnung definierenden Rand der Druckbehälterwandung 4 aufliegt (also in Figur 3B auch auf den rechtsäußeren Rand der Druckbehälterwandung 4). Wie in der Figur 2 gut erkennbar, ist die Schiene 50 in der Schließstellung bzgl. der Fördervorrichtung 60 vorzugsweise nicht geneigt, also beispielsweise mit ihrer Längsachse parallel zur Horizontalen, um somit insbesondere auf der zu verschließenden Öffnung bzw. der Druckbehälterwand 4, beispielsweise auf dem Flanschbereich 4d, plan aufzuliegen.

Die durch die Sensorik 80 erkannte Schließstellung kann sodann an die Steuervorrichtung weitergegeben werden, welche dann auf Basis dieser erkannten Schließstellung das Druckbehältersystem 1 entsprechend steuert. Beispielsweise kann die Steuervorrichtung im Anschluss an die erkannte Schließstellung das Schließelement 5a steuern, sodass das Schließelement 5a den Deckel 5 mit der Drückbehälterwand 4 in der Schließstellung verschließt; daran anschließend kann beispielsweise vorgesehen sein, dass die Steuervorrichtung entsprechende Komponenten ansteuert, um die Druckreaktion in der Reaktionskammer 3 durchzuführen.

Alternativ oder zusätzlich kann die Sensorik 80 eingerichtet sein, die Offenstellung des Deckels 5 auf Basis einer (der vorherig beschriebenen Relativbewegung gegensinnigen) Relativbewegung, insbesondere Neigebewegung um den Drehpunkt DP, der Schiene 50 zu erkennen. Dies erfolgt entsprechend der Erkennung der Schließstellung, wobei die Relativbewegung dann durch Bewegen des Deckels 5 in die Offenstellung bewirkt wird. So kann beispielsweise vorgesehen sein, dass sobald der Deckel 5 die Schließstellung verlässt, die Schiene 50 und somit der Deckel 5 sich um die Neigeachse bzw. den Drehpunkt DP drehen und folglich die Sensorik 80 zumindest aufgrund dieser Drehung bzw. Neigebewegung die verlassene Schließstellung bzw. Offenstellung erkennt.

Vorzugsweise ist die Sensorik 80 eingerichtet, durch die Relativbewegung eine Anpresskraft des Deckels 5 zum Verschließen der Reaktionskammer 3 in der Schließstellung zu erfassen und die Schließstellung zu erkennen, sobald die Anpresskraft eine definierte Schwellenanpresskraft übersteigt. Mit anderen Worten kann vorgesehen sein, dass die Sensorik 80 mit fortschreitender Verstellung bzw. abnehmender Neigung der Schiene 50 relativ zur Fördervorrichtung 60 bzw. Horizontalen eine steigende Anpresskraft erkennt. Somit erkennt die Sensorik 80 beispielsweise eine die definierte Schwellenanpresskraft übersteigende Anpresskraft, sobald die Schiene 50 relativ zur Fördervorrichtung 60 nicht geneigt ist bzw. mit ihrer Längsachse parallel zur Horizontalen ist (vgl. Figur 2).

In einer besonders bevorzugten Ausführungsform weist die Sensorik 80 ein elastisches Element (Federelement etc.) 81 auf, welches sich aufgrund der Relativbewegung der Schiene 50 relativ zur Fördervorrichtung 60 komprimiert, wobei auf Basis der Komprimierung des elastischen Elements 81 und/oder auf Basis der durch die Komprimierung des elastischen Elements 81 bewirkten Rückstellkraft die Anpresskraft durch die Sensorik 80 erfasst wird. Vorzugsweise ist die Sensorik 80 eingerichtet, eine Stromänderung des Antriebs (elektrischer Motor) der Fördervorrichtung 60 zu messen, wobei der gemessene Strom mit steigender Komprimierung des elastischen Elements 81 steigt und die Sensorik 80 auf Basis dieses steigenden Stroms einen Kraftanstieg und folglich eine steigende Anpresskraft erfasst. Die Sensorik 80 kann somit besonders einfach auf den Öffnungsgrad bzw. Restverschluss des Druckbehälters 2 schließen. Vorzugsweise ist das elastische Element 81 unterhalb der Schiene 50 vorgesehen, beispielsweise auf einem Element 82, welches bevorzugt als Stange ausgebildet ist. Folglich ist die Schiene 50 vorzugsweise relativ zu dem Element 82 neigbar, bzw. das Element 82 ist bevorzugt in der Horizontalen vorgesehen. Das Element 82 kann starr mit den linearen Führungselementen wie beispielsweise dem Schubgelenk bzw. Lift-Schlitten verbunden sein, sodass die Schiene 50 relativ zu dem Element 82 bewegbar bzw. neigbar ist, um mit den durch das Element 82 vorgesehenen Teilen funktional zusammenwirken zu können.

Die Schiene 50 kann beispielsweise durch die Gewichtskraft der Schiene 50 und/oder des Deckels 5 in die relativ zur Fördervorrichtung 60 verstellte bzw. geneigte Stellung getrieben werden. Alternativ oder zusätzlich kann vorgesehen sein, dass die durch die Komprimierung des elastischen Elements 81 bewirkte Rückstellkraft die Schiene 50 und somit den Deckel 5 in die relativ zur Fördervorrichtung 60 verstellte bzw. geneigte Stellung treibt.

Die Bewegbarkeit, vorzugsweise Neigbarkeit, der Schiene 50 relativ zur Fördervorrichtung 60 wird vorzugsweise über den Befestigungsbereich 57 bereitgestellt. Das heißt, der Befestigungsbereich 57 ist vorzugsweise gestaltet, einerseits die Schiene 50 an die Fördervorrichtung 60 bzw. an die linearen Führungselemente zu befestigen, damit der Deckel 5 zwischen der Offenstellung und der Schließstellung bewegt werden kann, und andererseits die relative Bewegbarkeit bzw. Neigbarkeit der Schiene 50 relativ zur Fördervorrichtung 60 bereitzustellen. Dies kann beispielsweise erfolgen, indem entsprechende Befestigungsmittel zum Befestigen der Schiene 50 an die Fördervorrichtung 60 so vorgesehen sind, dass der Freiheitsgrad zum Bewegen bzw. Neigen der Schiene 50 relativ zur Fördervorrichtung 60 und bevorzugt um den Drehpunkt DP bereitgestellt ist. Beispielsweise befestigen diese Befestigungsmittel die Schiene 50 an die Fördervorrichtung 60 mit einem definierten Spiel, sodass die relative Bewegbarkeit zwischen Schiene 50 und Fördervorrichtung 60 bereitgestellt ist.

Vorzugsweise ist ferner ein Stellelement 83 vorgesehen, beispielsweise in der Form einer Stellschraube, wobei das Stellelement 83 eingerichtet ist, die Neigung der Schiene 50 in der Schließstellung einzustellen und/oder als Anschlag für die Schiene 50 in der Schließstellung zu dienen. Durch Auflage der Schiene 50 auf das Stellelement 83 erkennt die Sensorik 80 im Antrieb der Fördervorrichtung 60 einen zusätzlichen (starken) Stromanstieg, wobei die Sensorik 80 auf Basis dieses zusätzlichen Stromanstiegs die endgültige Schließstellung (End-Detektion) des Deckels 50 erkennt. Das Stellelement 83 ist vorzugsweise eingerichtet, die Schiene 50 in der Schließstellung bzgl. der Horizontalen etwas zu neigen, um somit in der Schließstellung beispielsweise vorhandene Toleranzen des Druckbehälters 2 bzw. der Druckbehälterwand 4, die die zu verschließende Öffnung definiert, auszugleichen.

Die Steuervorrichtung kann auch eingerichtet sein, Werte der wenigstens einen Vorrichtung 56, insbesondere der Druckmessvorrichtungen 56c und/oder 56d, zu empfangen und zur weiteren Verarbeitung, beispielsweise zur Anzeige, weiterzuleiten. Die Steuervorrichtung kann auch eingerichtet sein, die Ventile 56a und/oder 56b zu steuern, um einen bestimmten Druck in der Reaktionskammer 3 zu steuern und/oder zu regeln. Die Steuervorrichtung kann auch eingerichtet sein, sonstige Vorrichtungen (beispielsweise die Rührvorrichtung 9 und/oder die Kühlung mittels der Druckbehälterwand 4 und/oder die Heizvorrichtung, insbesondere den Mikrowellengenerator) zum Durchführen der Druckreaktionen an den Proben P zu steuern. V

Die Schiene 50 kann aus einem hochdruckresistenten Material hergestellt sein, vorzugsweise derart, dass die Schiene 50 den in der Fluid-Leitung 53 herrschenden Drücken widersteht, also insbesondere einen Druck in der Reaktionskammer 3 während einer chemischen und/oder physikalischen Druckreaktion an den Proben P. Die in der Fluid-Leitung 53 herrschenden Drücke liegen dabei in der Regel im Bereich von bis zu wenigstens 200 bar, vorzugsweise bis zu wenigstens 500 bar. Die Schiene 50 kann alternativ oder zusätzlich aus einem chemikalienresistenten Material hergestellt sein, und/oder die Fluid-Leitung 53 kann eine chemikalienresistente Auskleidung wie beispielsweise eine Beschichtung und/oder einen Schlauch aufweisen. Die vorgenannte Auskleidung kann aus einem Kunststoff, vorzugsweise PTFE, hergestellt sein. Die Wandstärke der Schiene 50 ist vorzugsweise größer als der Querschnitt bzw. der Durchmesser der Fluid-Leitung 53 ausgebildet, um somit eine besonders gute Festigkeit bzw. Steifigkeit für die bestimmungsgemäße Verwendung bereitzustellen. Kommt die Schiene 50 zum Bewegen des Deckels 5 zwischen der Schließstellung und der Offenstellung zum Einsatz, beispielsweise mittels der Fördervorrichtung 60, so weist die Schiene 50 bzw. der Material eine wenigstens der Last des Deckels 5 entsprechende Festigkeit bzw. Steifigkeit auf. Die Schiene 50 kann entsprechend kleiner dimensioniert werden, wenn diese nicht zum Bewegen des Deckels 5 vorgesehen ist, beispielsweise bei der weiter unten beschriebenen zweiten Ausführungsform des Druckbehältersystems 1.

Die Schiene 50 kann aus Metall, insbesondere Stahl, vorzugsweise aus einer korrosionsbeständigen Edelstahl-Legierung, besonders bevorzugt aus 1.4571 Stahl oder hochwertiger, hergestellt sein. Die Schiene 50 kann aus einem Block, vorzugsweise aus einem einzigen Block, hergestellt sein. (Metall-)blöcke, die insbesondere länglich ausgebildet sind, sind einfach bereitstellbar bzw. herstellbar und somit besonders vorteilhaft für eine einfache Herstellung der Schiene 50. Die Schiene 50 hat - in Richtung der Längsachse der Schiene 50 gesehen - vorzugsweise einen eckigen, insbesondere rechteckigen oder quadratischen Querschnitt. Dies ist insbesondere deshalb von Vorteil, da der eckige Querschnitt, insbesondere ein gerader bzw. flächiger Bereich des entsprechenden Teils der Schiene 50, einfach mit dem Druckbehälter 2 für eine starre Verbindung mechanisch verbunden werden kann. Durch diese starre Verbindung zwischen Schiene 50 und Druckbehälter 2 kann insbesondere eine um die Längsachse der Schiene 50 drehsichere Verbindung zwischen Schiene 50 und Druckbehälter 2 bewirkt werden. Allgemein ist die Schiene 50 jedoch nicht auf einen bestimmten Querschnitt beschränkt und kann beispielsweise auch einen runden Querschnitt aufweisen. Die Schiene 50 ist vorzugsweise entlang der Längsachse im Querschnitt im Wesentlichen gleich ausgebildet.

Wie insbesondere die Figuren 2 bis 4 erkennen lassen, kann der Fluid-Leitung 53 über den ersten Anschluss 51 ein Fluid zugeführt werden, beispielsweise über einen Verdichter 70, der mit dem ersten Anschluss 51 und somit der Fluid-Leitung 53 und der Reaktionskammer 3 fluidisch verbunden ist. Bevorzugt ist der erste Anschluss 51 der einzige Anschluss der Schiene 50 bzw. der Fluid-Leitung 53 über den ein Fluid der Fluid-Leitung 53 zugeführt wird. In entsprechender Weise ist der zweite Anschluss 52 vorzugsweise der einzige Anschluss der Schiene 50 bzw. der Fluid-Leitung 53 über den ein Fluid der Fluid-Leitung 53 - bei geschlossenen Ventilen der Schiene 50 - abgeführt wird.

Zum Verdichten des der Reaktionskammer 3 mittels des Verdichters 70 zugeführten Fluids weist der Verdichter 70 vorzugsweise einen Verdichtermechanismus 71, beispielsweise einen Kompressor, auf. Der Verdichter 70 ist vorzugsweise wenigstens über ein flexibles Verbindungselement 72, beispielsweise über einen Schlauch, mit dem ersten Anschluss 51 fluidisch verbunden. Das Verbindungselement 72 ist vorzugsweise ausgebildet, einen Druck von bis zu 200 bar, vorzugsweise im Bereich von 50 bis 70 bar oder im Bereich von 100 bar bis 200 bar, besonders bevorzugt maximal 100 bar oder 200 bar, standzuhalten. Das flexible Verbindungselement 72 ist insbesondere auch bei dem zwischen der Schließstellung und der Offenstellung bewegbaren Deckel 5, also insbesondere bei vorhandener Fördervorrichtung 60 von Vorteil, da dieser eine Relativbewegung zwischen Schiene 50 und Verdichter 70 zulässt. Alternativ oder zusätzlich ist es jedoch auch denkbar, dass während dieser Bewegung des Deckels 5 der Verdichter 70, vorzugsweise inklusive aller die Schiene 50 mit den Verdichter 70 verbindenden Komponenten, sich zusammen mit dem Deckel 5 bewegt, also keine Relativbewegung zwischen Deckel 5 und Verdichter 70 stattfindet.

Der Verdichter 70 ist vorzugsweise eingerichtet, zwischen einer Ladestellung und einer Arbeitsstellung zu wechseln. In der Ladestellung führt der Verdichter 70 der Reaktionskammer 3 ein Lade-Fluid bzw. Lade-Gas zu, um beispielsweise die Reaktionskammer 3 für eine Druckreaktion unter Druck zu setzen. Das Lade-Fluid wird vorzugsweise über eine erste Leitung 73, die mit dem Verdichtermechanismus 71 fluidisch verbunden ist, bereitgestellt. In der Arbeitsstellung führt der Verdichter 70 der Reaktionskammer 3 ein Arbeitsfluid bzw. Arbeitsgas, beispielsweise Luft, zu. Die Zuführung des Arbeitsfluids erfolgt vorzugsweise während eine Druckreaktion in der Reaktionskammer 3 stattfindet, um beispielsweise die Druckreaktion zu unterstützen bzw. aufrechtzuhalten. Das Arbeitsfluid wird vorzugsweise über eine zweite Leitung 74, die mit dem Verdichtermechanismus 71 fluidisch verbunden ist, bereitgestellt. Der Verdichtermechanismus 71 ist vorzugsweise eingerichtet, wahlweise eine fluidische Verbindung zwischen Reaktionskammer 3 und erster Leitung 73 oder Reaktionskammer 3 und zweiter Leitung 74 bereitzustellen, um zwischen der Ladestellung und der Arbeitsstellung zu wechseln.

Stromaufwärts des ersten Anschlusses 51, vorzugsweise zwischen dem ersten Anschluss 51 und dem Verdichter 70, kann ein Rückschlagventil 75 vorgesehen sein, welches eingerichtet ist, eine aus dem ersten Anschluss 51 in Richtung des Verdichters 70 strömende Strömung zu blockieren. Bevorzugt ist, wenn das stromabwärtsseitige Ende des Rückschlagventils 51 mit dem ersten Anschluss 51 fluidisch verbunden ist und das stromaufwärtsseitige Ende des Rückschlagventils 51 mit dem stromabwärtsseitigen Ende des flexiblen Verbindungselements 72 fluidisch verbunden ist.

Stromaufwärts des ersten Anschlusses 51 kann ein Puffer 76 vorgesehen sein, der ein definiertes Eigenvolumen zur Pufferung von aus dem Verdichter 71 in Richtung des ersten Anschlusses 51 strömenden Fluid hat. Das Eigenvolumen des Puffers 76 liegt vorzugsweise in einem Bereich von 0, 5 bis 5 l. Bevorzugt hat der Puffer 76 ein derartiges Eigenvolumen, dass von dem Verdichter 70 in den Puffer 76 strömendes Fluid einen Druck im Bereich von 10 bis 70 bar, vorzugsweise im Bereich von 50 bis 70 bar, hat. Ist der Puffer 76 vorgesehen, so wird dieser durch den Verdichter 70, insbesondere durch dessen Lade-Fluid, aufgeladen, um (später) beim Druckentlasten der Reaktionskammer 3 eine automatische Spülung der Fluid-Leitung 53 und/oder des wenigstens einen dritten Anschlusses 55 und vorzugsweise der wenigstens einen Vorrichtung 56 zu bewirken. Der Puffer 76 ist vorzugsweise stromaufwärts des Rückschlagventils 75, besonders bevorzugt zwischen dem ersten Anschluss 51 bzw. Rückschlagventil 75 und dem Verdichter 70 vorgesehen. Der Puffer 76 ist mit seinem stromabwärtsseitigen Ende vorzugsweise mit dem flexiblen Verbindungselement 72 fluidisch verbunden, das stromaufwärtsseitige Ende des Puffers 76 ist vorzugsweise mit dem Verdichter 70 fluidisch verbunden.

Vorzugsweise ist ein weiteres Rückschlagventil 77 stromaufwärts des Puffers 76 vorgesehen. Das weitere Rückschlagventil 77 ist dabei eingerichtet, eine aus dem Puffer 76 in Richtung des Verdichters 70 strömende Strömung zu blockieren. Das weitere Rückschlagventil 77 ist vorzugsweise zwischen dem Puffer 76 und dem Verdichter 71 vorgesehen und besonders bevorzugt direkt mit diesem verbunden; das stromabwärtsseitige Ende des weiteren Rückschlagventils 77 ist vorzugsweise mit dem stromaufwärtsseitigen Ende des Puffers 76 fluidisch verbunden, wobei das stromaufwärtsseitige Ende des weiteren Rückschlagventils 77 vorzugsweise mit dem stromabwärtsseitigen Ende des Verdichters 70 fluidisch verbunden ist.

Der Puffer 76 kann einen nicht näher dargestellten Filter zum Filtern des aus dem Verdichter 70 in Richtung des ersten Anschlusses 51 strömenden Fluids aufweisen, um somit insbesondere ungewollte Bestandteile aus dem von dem Verdichter 70 der Reaktionskammer 3 zugeführten Fluid herauszufiltern. Der Puffer 76 kann hierfür ausgestaltet sein (beispielsweise durch mehrteilige Gestaltung), um einen Zugriff auf den Filter zu erlauben, beispielsweise zum Austausch und/oder zur Wartung des Filters.

Die Steuervorrichtung ist vorzugsweise eingerichtet den Verdichter 70 entsprechend der oben genannten Funktionalität, also insbesondere zum Wechseln zwischen der Arbeitsstellung und der Ladestellung sowie zum entsprechenden Zuführen der jeweiligen Fluide, zu steuern.

Die Steuervorrichtung kann ferner eingerichtet sein, der Fluid-Leitung 53 über den ersten Anschluss 51 ein Fluid zum Spülen der Fluid-Leitung 53 zuzuführen. Diese Spülung erfolgt vorzugsweise, nachdem die durch den Puffer 76 bewirkte Spülung durchgeführt wurde bzw. nachdem die Reaktionskammer 3 druckentlastet wurde. Das Fluid zum Spülen kann beispielsweise durch den Verdichter 70 bereitgestellt sein. Die Steuervorrichtung ist dabei vorzugsweise eingerichtet, vor einer solchen Spülung den Deckel 5 (etwas) in Richtung der Offenstellung zu bewegen, wie dies in der Figur 3A bzw. 3B beispielhaft dargestellt ist. Wie die Figuren 3A und 3B erkennen lassen, ist in dieser Stellung der Deckel 5 weniger geöffnet als in der in Figur 4 beispielhaft dargestellten Offenstellung des Deckels 5. Während des Spülens befindet sich der Deckel vorzugsweise in der wie in Figur 3A bzw. 3B beispielhaft dargestellten Stellung. In dieser Stellung, in der das Schließelement 5a geöffnet ist und vorzugsweise die Fördervorrichtung 60 den Deckel 5 mittels der Schiene 50 entsprechend (etwas) angehoben hat, kann folglich das Fluid zum Spülen der Fluid-Leitung 53 gut aus dem Druckbehälter 2 entweichen, und zwar ohne dass in der Reaktionskammer 3 befindliche Stoffe bzw. Chemikalien aus dem Druckbehälter 2 bzw. Reaktionskammer 3 entweichen bzw. spritzen. Genauer gesagt wird, wie in Figur 3A bzw. 3B gut erkennbar, zwischen dem Deckelteil 5c, vorzugsweise dessen Rand, und dem Innenbehälter 3a ein (kleiner) Spalt gebildet, durch welchen das Spül-Fluid inklusive der durch das Spül-Fluid gespülten Stoffe entweichen kann.

Bevorzugt ist die Steuervorrichtung eingerichtet, vor dem Spülen in der etwas geöffneten Stellung des Deckels 5 den in der Reaktionskammer 3 herrschenden Druck über ein mit dem dritten Anschluss 55 verbundenes Ventil, beispielsweise über das Ventil 56a, abzubauen. Vorzugsweise ist die Steuervorrichtung zudem eingerichtet, dieses Ventil vor dem Bewegen des Deckels 5 in Richtung der Offenstellung (zum Spülen) wieder zu schließen. Das Ventil bzw. der durch das Ventil bewirkte Druckabbau bewirken dabei insbesondere, dass das Fluid zum Spülen der Fluid-Leitung 53 in Richtung der Reaktionskammer 3 strömen kann. Ferner wird durch die vorgenannte Druckentlastung verhindert, dass bei geöffnetem Deckel 5 in der Reaktionskammer 3 befindliche Chemikalien aus der Reaktionskammer 3 entweichen können, insbesondere herausspritzen.

Die Steuereinrichtung ist vorzugsweise eingerichtet, dass die vorgenannte Spülung direkt nach bzw. vor einer in der Reaktionskammer 3 durchgeführten Druckreaktion durchgeführt wird, sodass für jede Druckreaktion eine ausreichend gereinigte Fluid-Leitung 53 und/oder Reaktionskammer 3 vorliegt. Die Steuereinrichtung kann auch eingerichtet sein, den Reinigungs- bzw. Spülvorgang nach der Entnahme der Proben P und während in der Schließstellung befindlichen bzw. abgefahrenen Deckel 5 (automatisch) durchzuführen.

Figur 5 zeigt beispielhaft eine zweite Ausführungsform des erfindungsgemäßen Druckbehältersystems 1. Alle Ausführungen bezüglich der oben beschriebenen ersten Ausführungsform gelten für die zweite Ausführungsform analog, falls im Weiteren nicht anders beschrieben.

Das Druckbehältersystem 1 gemäß der zweiten Ausführungsform unterscheidet sich gegenüber dem Druckbehältersystem 1 gemäß der ersten Ausführungsform insbesondere hinsichtlich der Verbindung zwischen Druckbehälter 2 und starrer Schiene 50. Gemäß dieser Ausführungsform ist nämlich die Schiene 50 nicht mit dem Deckel 5 starr verbunden, sondern mit der Drückbehälterwand 4. Die starre (mechanische) Verbindung zwischen Drückbehälterwand 4 und Schiene 50 erfolgt vorzugsweise in einem oberen Bereich der Drückbehälterwand 4, insbesondere unmittelbar unterhalb des Deckels 5 bzw. des Sicherungselements 5a. Besonders bevorzugt ist die Schiene 50 mit der Drückbehälterwand 4 in einem Bereich zwischen Kühlleitung 4a und Flanschbereich 4d, vorzugsweise in einem Bereich zwischen Kühlleitung 4a und Flanschbereich 4d, mit der Drückbehälterwand 4 verbunden.

Die fluidische Verbindung zwischen Reaktionskammer 3 und Fluid-Leitung 53 erfolgt dabei vorzugsweise wenigstens über die Drückbehälterwand 4 und den Deckel 5, insbesondere über den zweiten Anschluss 52 und eine in der Drückbehälterwand 4 ausgebildete Bohrung 4e und vorzugsweise über eine weitere Bohrung 5d, die im Deckel 5 ausgebildet ist. In der Schließstellung des Deckels 5 sind demnach die Bohrungen 4e und 5d miteinander fluidisch verbunden, um somit die Fluid-Leitung 53 fluidisch mit der Reaktionskammer 3 zu verbinden. In der Schließstellung des Deckels 5 kann der Übergang von der Bohrung 4e zur Bohrung 5d mit wenigstens einem entsprechenden Dichtungselement (Dichtring etc.) bzw. einer entsprechenden Dichtungskupplung abgedichtet sein, sodass an diesem Übergang kein Fluid entweichen kann. Vorzugsweise drückt die Klammer 5a das wenigstens eine Dichtungselement bzw. die Teile der Dichtungskupplung in der Schließstellung derart (zusammen), dass der Dichtungseffekt an dem Übergang von der Bohrung 4e zur Bohrung 5d bewirkt wird. Bevorzugt stellt das Aufnahmemittel 8c bzw. dessen Bohrung die fluidische Verbindung zwischen Reaktionskammer 3 und Bohrung 5d bereit.

Die vorliegende Erfindung ist jedoch nicht auf die beispielhaft beschriebenen, bevorzugten Ausführungsformen beschränkt, solange sie vom Gegenstand der folgenden Ansprüche umfasst ist. Alle Merkmale lassen sich beliebig vorteilhaft miteinander kombinieren. Insbesondere kann die Fördervorrichtung 60 auch zum Bewegen des Deckels 5 der zweiten Ausführungsform zur Anwendung kommen, beispielsweise indem die Fördervorrichtung 60 mit dem Deckel 5 über ein entsprechendes Hebe- und Senkelement mechanisch verbunden ist.

## Patentansprüche

1. Druckbehältersystem (1), aufweisend:
einen Druckbehälter (2) mit einer Reaktionskammer (3) als Druckraum zum Auslösen und/oder Fördern chemischer und/oder physikalischer Druckreaktionen von in der Reaktionskammer (3) aufgenommenen Proben (P), und
eine starr mit einem Teil des Drückbehälters (2) verbundene starre Schiene (50) mit einem ersten Anschluss (51) zum Fluid-Einlass, einem zweiten Anschluss (52) zum Fluid-Auslass und einer den ersten Anschluss (51) mit dem zweiten Anschluss (52) fluidisch verbindenden Fluid-Leitung (53),
wobei die Fluid-Leitung (53) über den zweiten Anschluss (52) mit der Reaktionskammer (3) fluidisch verbunden ist, und
wobei die Schiene (50) wenigstens einen mit der Fluid-Leitung (53) fluidisch verbundenen dritten Anschluss (55) aufweist, welcher mit einer Vorrichtung (56) verbindbar ist, sodass die Vorrichtung (56) mit der Fluid-Leitung (53) und somit mit der Reaktionskammer (3) fluidisch verbunden ist.

2. Druckbehältersystem (1) nach Anspruch 1, wobei der Druckbehälter (2) einen Deckel (5) aufweist, welcher zwischen einer Offenstellung, in der die Reaktionskammer (3) geöffnet ist, und einer Schließstellung, in der die Reaktionskammer (3) geschlossen ist, bewegbar ist, und wobei die Schiene (50) starr mit dem Deckel (5) verbunden ist.

3. Druckbehältersystem (1) nach Anspruch 1 oder 2, wobei die Schiene (50) derart gestaltet und mit dem Deckel (5) verbunden ist, dass durch Bewegen, vorzugsweise durch Heben und Senken, der Schiene (50) der Deckel (5) zwischen der Offenstellung und der Schließstellung bewegt werden kann.

4. Druckbehältersystem (1) nach Anspruch 3, wobei die Schiene (50) vorzugsweise einen Befestigungsbereich (57) aufweist, über welchen die Schiene (50) an eine Fördervorrichtung (60) wie beispielsweise eine Hebe- und Senkvorrichtung zum Bewegen bzw. Heben und Senken der Schiene (50) und somit zum Bewegen des Deckels (5) zwischen der Offenstellung und der Schließstellung befestigt werden kann, und/oder
wobei das Druckbehältersystem (1) ferner eine Fördervorrichtung (60) aufweist, vorzugsweise eine Hebe- und Senkvorrichtung, zum Bewegen bzw. Heben und Senken der Schiene (50) und somit zum Bewegen des Deckels (5) zwischen der Offenstellung und der Schließstellung, wobei die Schiene (50) vorzugsweise über den Befestigungsbereich (57) an der Fördervorrichtung (60) befestigt ist.

5. Druckbehältersystem (1) nach Anspruch **4,** wobei die Schiene (50) relativ zur Fördervorrichtung (60) bzgl. einer Achse bewegbar, insbesondere neigbar ist, und wobei das Druckbehältersystem (1) eine Sensorik aufweist, welche eingerichtet ist, die Schließstellung des Deckels (5) auf Basis einer Relativbewegung, insbesondere Neigebewegung, der Schiene (50) relativ zur Fördervorrichtung (60) und bzgl. der Achse zu erkennen, wobei die Relativbewegung durch Bewegen des Deckels (5) in die Schließstellung bewirkt wird,
wobei vorzugsweise die Sensorik eingerichtet ist, durch die Relativbewegung eine Anpresskraft des Deckels (5) zum Verschließen der Reaktionskammer (3) in der Schließstellung zu erfassen und die Schließstellung zu erkennen, sobald die Anpresskraft eine definierte Schwellenanpresskraft übersteigt.

6. Druckbehältersystem (1) nach einem der vorhergehenden Ansprüche, wobei der Druckbehälter (2) eine die Reaktionskammer (3) umgebende Druckbehälterwand (4) aufweist, und wobei die Schiene (50) starr mit der Drückbehälterwand (4) verbunden ist,
wobei vorzugsweise die Druckbehälterwand (4) eine Bohrung (4e) aufweist, und wobei die Fluid-Leitung (53) wenigstens über den zweiten Anschluss (52) und die Bohrung (4e) und vorzugsweise über eine weitere im Deckel (5) ausgebildete Bohrung (5d) mit der Reaktionskammer (3) fluidisch verbunden ist.

7. Druckbehältersystem (1) nach einem der vorhergehenden Ansprüche, ferner aufweisend ein Befestigungsmittel (54) zum Befestigen der Schiene (50) an das Teil des Druckbehälters (2), vorzugsweise an die Druckbehälterwand (4) und/oder den Deckel (5), wobei das Befestigungsmittel (54) vorzugsweise derart ausgebildet ist, dass die Fluid-Leitung (53) über den zweiten Anschluss (52) und das Befestigungsmittel (54), beispielsweise über eine durch das Befestigungsmittel (54) verlaufende Durchgangsbohrung (54b), mit der Reaktionskammer (3) fluidisch verbunden ist.

8. Druckbehältersystem (1) nach einem der vorhergehenden Ansprüche, ferner aufweisend eine Steuervorrichtung zur Steuerung von mit der Schiene (50) fluidisch verbundenen Vorrichtungen (56) und/oder zur Steuerung der Bewegung der Schiene (50), insbesondere der Fördervorrichtung (60),
wobei vorzugsweise die Steuervorrichtung eingerichtet ist, der Fluid-Leitung (53) über den ersten Anschluss (51) ein Fluid zum Spülen der Fluid-Leitung (53) zuzuführen, wobei die Steuervorrichtung weiter bevorzugt eingerichtet ist, vor dem Spülen den Deckel (5) in Richtung der Offenstellung derart zu bewegen, dass während des Spülens der Fluid-Leitung (53) der Deckel (5) weniger geöffnet ist als in der Offenstellung,
wobei das Druckbehältersystem (1) ferner bevorzugt ferner ein mit dem dritten Anschluss (55) verbundenes Ventil (56a) aufweist, wobei die Steuervorrichtung eingerichtet ist, vor dem Spülen das Ventil (56a) zu öffnen, sodass ein in der Reaktionskammer (3) herrschender Druck abgebaut wird, wobei die Steuervorrichtung vorzugsweise eingerichtet ist, das Ventil (56a) vor dem Bewegen des Deckels (5) in Richtung der Offenstellung zu schließen.

9. Druckbehältersystem (1) nach einem der vorhergehenden Ansprüche, wobei der wenigstens eine dritte Anschluss (55) integral mit der Schiene ausgebildet ist, und/oder
wobei der wenigstens eine dritte Anschluss (55) eine Befestigungsstruktur wie beispielsweise eine Bohrung, insbesondere eine Durchgangsbohrung, zur Befestigung der Vorrichtung (56) aufweist, wobei die Befestigungsstruktur vorzugsweise einen Befestigungsbereich, insbesondere einen der Vorrichtung korrespondierenden Befestigungsbereich wie beispielsweise ein Gewinde und/oder eine Schnappverbindung, zur Befestigung, vorzugsweise zur kraft- und/oder formschlüssigen Befestigung, der Vorrichtung (56) an den dritten Anschluss (55) aufweist, und/oder
wobei der wenigstens eine dritte Anschluss (55) ausgebildet ist, die Vorrichtung (56) mit der Schiene (50) in einer Montagerichtung zu verbinden, wobei die Montagerichtung im Wesentlichen senkrecht zu einer Strömungsrichtung der Fluid-Leitung (53) ist, wobei die Montagerichtung vorzugsweise die Erstreckungsrichtung der Befestigungsstruktur, insbesondere der Bohrung, ist, und/oder
wobei das Druckbehältersystem (1) wenigstens zwei, vorzugsweise drei, vier, fünf oder sechs dritte Anschlüsse (55) aufweist, welche vorzugsweise auf derselben Seite der Schiene (50) mit Bezug zum Druckbehälter (2) vorgesehen sind, besonders bevorzugt auf einer dem Druckbehälter (2) abgewandten Seite der Schiene (50).

10. Druckbehältersystem (1) nach einem der vorhergehenden Ansprüche, wobei der erste Anschluss (51) mit einem Verdichter (70) fluidisch verbindbar ist, wobei das Druckbehältersystem (1) vorzugsweise einen mit dem ersten Anschluss (51) fluidisch verbundenen Verdichter (70) zum Zuführen eines Fluids in die Reaktionskammer (3) aufweist.

11. Druckbehältersystem (1) nach Anspruch 10, ferner aufweisend ein stromaufwärts des ersten Anschlusses (51), vorzugsweise zwischen dem ersten Anschluss (51) und dem Verdichter (70) vorgesehenes Rückschlagventil (75), welches eingerichtet ist, eine aus dem ersten Anschluss (51) in Richtung des Verdichters (70) strömende Strömung zu blockieren.

12. Druckbehältersystem (1) nach Anspruch 10 oder 11, ferner aufweisend einen stromaufwärts des ersten Anschlusses (51), vorzugsweise stromaufwärts des Rückschlagventils (75), besonders bevorzugt zwischen dem ersten Anschluss (51) bzw. Rückschlagventil (75) und dem Verdichter (70) vorgesehenen Puffer (76) mit einem definierten Eigenvolumen zur Pufferung von aus dem Verdichter (70) in Richtung des ersten Anschlusses (51) strömenden Fluid,
wobei vorzugsweise der Puffer (76) einen Filter zum Filtern von aus dem Verdichter (70) in Richtung des ersten Anschlusses (51) strömenden Fluid aufweist, und/oder
wobei vorzugsweise das Druckbehältersystem (1) ferner ein stromaufwärts des Puffers (76), vorzugsweise zwischen dem Puffer (76) und dem Verdichter (70) vorgesehenes weiteres Rückschlagventil (77) aufweist, wobei das weitere Rückschlagventil (77) eingerichtet ist, eine aus dem Puffer (76) in Richtung des Verdichters (70) strömende Strömung zu blockieren.

13. Druckbehältersystem (1) nach einem der vorhergehenden Ansprüche, wobei die Schiene (50) aus einem hochdruckresistenten Material hergestellt ist, vorzugsweise derart, dass die Schiene (50) den in der Reaktionskammer (3) herrschenden Drücken zum Auslösen und/oder Fördern chemischer und/oder physikalischer Druckreaktionen, insbesondere in der Fluid-Leitung (53) herrschende Drücke im Bereich von bis zu wenigstens 200 bar, vorzugsweise bis zu wenigstens 500 bar, widerstehen kann, und/oder
wobei die Schiene (50) aus einem chemikalienresistenten Material hergestellt ist, und/oder
wobei die Fluid-Leitung (53) eine chemikalienresistente Auskleidung, insbesondere eine Beschichtung und/oder einen Schlauch aufweist, wobei die Auskleidung beispielsweise aus Kunststoff, vorzugsweise PTFE, hergestellt ist.

14. Druckbehältersystem (1) nach einem der vorhergehenden Ansprüche, wobei die Schiene (50) aus Metall und/oder aus einem Block, vorzugsweise aus einem einzigen Block, hergestellt ist, und/oder
wobei die Wandstärke der Schiene (50) größer ist als der Querschnitt der Fluid-Leitung (53), und/oder
wobei die Schiene (50) länglich ausgebildet ist, und/oder wobei die Schiene (50) einen runden oder eckigen, vorzugsweise einen rechteckigen oder quadratischen Querschnitt hat, und/oder wobei die Fluid-Leitung (53) nur eine Erstreckungsrichtung aufweist.

15. Druckbehältersystem (1) nach einem der vorhergehenden Ansprüche, ferner aufweisend wenigstens eine mit dem wenigstens einen dritten Anschluss verbundene Vorrichtung (56), wobei die wenigstens eine Vorrichtung (56) aufweist:
• ein Ventil, insbesondere ein Ventil (56a, 56b) zum vorzugsweise linearen oder schlagartigen Abbau von in der Reaktionskammer (3) herrschenden Druck,
• eine Druckmessvorrichtung (56c, 56d) zum Erfassen von in der Reaktionskammer (3) herrschenden Druck, und/oder
• eine Drucksicherung (56e) wie beispielsweise ein Berst-Ventil, insbesondere eine Berst-Membran, wobei die Drucksicherung (56e) vorzugsweise scheibenförmig ausgebildet ist.

## Claims

1. Pressure vessel system (1), comprising
a pressure vessel (2) having a reaction chamber (3) as a pressure space for initiating and/or promoting chemical and/or physical pressure reactions of samples (P) received in the reaction chamber (3), and
a rigid rail (50) which is rigidly connected to a part of the pressure vessel (2) with a first connection (51) for fluid intake, a second connection (52) for fluid outlet and a fluid conduit (53) which fluidically connects the first connection (51) to the second connection (52),
wherein the fluid conduit (53) is fluidically connected to the reaction chamber (3) via the second connection (52), and
wherein the rail (50) has at least one third connection (55) which is fluidically connected to the fluid conduit (53) and can be connected to a device (56), so that the device (56) is fluidically connected to the fluid conduit (53) and thus to the reaction chamber (3).

2. Pressure vessel system (1) as claimed in claim 1, wherein the pressure vessel (2) has a lid (5) which can be moved between an open position, in which the reaction chamber (3) is open, and a closed position, in which the reaction chamber (3) is closed, and wherein the rail (50) is rigidly connected to the lid (5).

3. Pressure vessel system (1) as claimed in claim 1 or 2, wherein the rail (50) is configured and connected to the lid (5) in such a way that the lid (5) can be moved between the open position and the closed position by moving, preferably by raising and lowering, the rail (50).

4. Pressure vessel system (1) as claimed in claim 3, wherein the rail (50) preferably comprises a fastening region (57) via which the rail (50) can be fastened to a transport device (60), for example a raising and lowering device for moving or raising and lowering the rail (50) and thus for moving the lid (5) between the open position and the closed position, and/or wherein the pressure vessel system (1) further comprises a transport device (60), preferably a raising and lowering device, for moving or raising and lowering the rail (50) and thus for moving the lid (5) between the open position and the closed position, wherein the rail (50) is preferably fastened via the fastening region (57) to the transport device (60).

5. Pressure vessel system (1) as claimed in claim 4, wherein the rail (50) can be moved, in particular inclined, relative to the transport device (60) or an axis, and wherein the pressure vessel system (1) has a sensor which is able to recognize the closed position of the lid (5) on the basis of a relative movement, in particular inclination movement, of the rail (50) relative to the transport device (60) and relative to the axis, wherein the relative movement is brought about by moving the lid (5) into the closed position,
wherein the sensor is preferably able to measure a contact pressure force of the lid (5) due to the relative movement for closing the reaction chamber (3) in the closed position and to recognize the closed position as soon as the contact pressure force exceeds a defined threshold contact pressure force.

6. Pressure vessel system (1) as claimed in any of the preceding claims, wherein the pressure vessel (2) has a pressure vessel wall (4) surrounding the reaction chamber (3), and wherein the rail (50) is rigidly connected to the pressure vessel wall (4),
wherein preferably the pressure vessel wall (4) has a drilled hole (4e), and
wherein the fluid conduit (53) is fluidically connected, at least via the second connection (52) and the drilled hole (4e) and preferably via a further drilled hole (5d) present in the lid (5), to the reaction chamber (3).

7. Pressure vessel system (1) as claimed in any of the preceding claims, further comprising a fastening device (54) for fastening the rail (50) to the part of the pressure vessel (2), preferably to the pressure vessel wall (4) and/or the lid (5), wherein the fastening device (54) is preferably configured so that the fluid conduit (53) is fluidically connected, via the second connection (52) and the fastening device (54), for example via a through-hole (54b) running through the fastening device (54), to the reaction chamber (3).

8. Pressure vessel system (1) as claimed in any of the preceding claims, further comprising a control device for controlling devices (56) fluidically connected to the rail (50) and/or for controlling the movement of the rail (50), in particular the transport device (60), wherein preferably the control device is configured for introducing a fluid via the first connection (51) into the fluid conduit (53) in order to flush the fluid conduit (53), wherein the control device is further preferably configured for moving the lid (5), before flushing, in the direction of the open position so that the lid (5) is less open than in the open position during flushing the fluid conduit (53),
wherein the pressure vessel system (1) preferably further comprises a valve (56a) connected to the third connection (55), wherein the control device is configured for opening the valve (56a) before flushing, so that a pressure prevailing in the reaction chamber (3) is reduced, wherein the control device is preferably configured for closing the valve (56a) before the lid (5) is moved in the direction of the open position.

9. Pressure vessel system (1) as claimed in any of the preceding claims, wherein the at least one third connection (55) is integral with the rail, and/or
wherein the at least one third connection (55) has a fastening structure, such as a drilled hole, in particular a through-hole, for fastening the device (56), wherein the fastening structure preferably has a fastening region, in particular a fastening region corresponding to the device, for example a thread and/or a snap connection, for fastening, preferably frictional fastening and/or positive locking, the device (56) to the third connection (55), and/or
wherein the at least one third connection (55) is configured for connecting the device (56) to the rail (50) in an assembly direction, wherein the assembly direction is essentially perpendicular to a flow direction of the fluid conduit (53), wherein the assembly direction is preferably the direction of extension of the fastening structure, in particular the drilled hole, and/or
wherein the pressure vessel system (1) has at least two, preferably three, four, five or six third connections (55), which are preferably provided on the same side of the rail (50) relative to the pressure vessel (2), particularly preferably on a side of the rail (50) facing away from the pressure vessel (2).

10. Pressure vessel system (1) as claimed in any of the preceding claims, wherein the first connection (51) can be fluidically connected to a compressor (70), wherein the pressure vessel system (1) preferably has a compressor (70) fluidically connected to the first connection (51) for feeding a fluid into the reaction chamber (3).

11. Pressure vessel system (1) as claimed in claim 10, further comprising a non-return valve (75) which is provided upstream of the first connection (51), preferably between the first connection (51) and the compressor (70), and which is able to block a flow from the first connection (51) in the direction of the compressor (70).

12. Pressure vessel system (1) as claimed in claim 10 or 11, further comprising a buffer (76) which is provided upstream of the first connection (51), preferably upstream of the non-return valve (75), particularly preferably between the first connection (51) or non-return valve (75) and the compressor (70), and which has a defined intrinsic volume for buffering fluid flowing out of the compressor (70) in the direction of the first connection (51), wherein preferably the buffer (76) has a filter for filtering fluid flowing out from the compressor (70) in the direction of the first connection (51), and/or
wherein preferably the pressure vessel system (1) further comprises a further non-return valve (77) provided upstream of the buffer (76), preferably between the buffer (76) and the compressor (70), wherein the further non-return valve (77) is able to block a flow from the buffer (76) in the direction of the compressor (70).

13. Pressure vessel system (1) as claimed in any of the preceding claims, wherein the rail (50) is made of a high-pressure resistant material, preferably so that the rail (50) can withstand the pressures prevailing in the reaction chamber (3) for initiating and/or promoting chemical and/or physical pressure reactions, in particular pressures prevailing in the fluid conduit (53) in the range up to at least 200 bar, preferably up to at least 500 bar, and/or
wherein the rail (50) is made of a chemically resistant material, and/or
wherein the fluid conduit (53) has a chemically resistant lining, in particular a coating and/or a hose, wherein the lining is, for example, made of polymer, preferably PTFE.

14. Pressure vessel system (1) as claimed in any of the preceding claims, wherein the rail (50) is made of metal and/or of a block, preferably of a single block, and/or
wherein the wall thickness of the rail (50) is greater than the cross-section of the fluid conduit (53), and/or
wherein the rail (50) is elongated, and/or
wherein the rail (50) has a round or angular, preferably a rectangular or square cross-section, and/or wherein the fluid conduit (53) has only one direction of extension.

15. Pressure vessel system (1) as claimed in any of the preceding claims, further comprising at least one device (56) connected to the at least one third connection, wherein the at least one device (56) comprises:
• a valve, in particular a valve (56a, 56b) for the preferably linear or abrupt reduction of pressure prevailing in the reaction chamber (3),
• a pressure measuring device (56c, 56d) for measuring pressure prevailing in the reaction chamber (3), and/or
• a pressure safety device (56e), for example a bursting valve, in particular a bursting membrane, wherein the pressure safety device (56e) preferably has a disk-like shape.

## Revendications

1. Système à contenant sous pression (1), présentant :
un contenant sous pression (2) avec une chambre de réaction (3) en tant qu'espace sous pression pour déclencher et/ou favoriser des réactions sous pression chimiques et/ou physiques d'échantillons (P) reçus dans la chambre de réaction (3),
et
un rail (50) rigide relié de manière rigide à une partie du contenant sous pression (2), avec un premier raccordement (51) à l'entrée de fluide, un deuxième raccordement (52) à la sortie de fluide et une conduite de fluide (53) reliant de manière fluidique le premier raccordement (51) au deuxième raccordement (52),
dans lequel la conduite de fluide (53) est reliée de manière fluidique à la chambre de réaction (3) par l'intermédiaire du deuxième raccordement (52), et
dans lequel le rail (50) présente au moins un troisième raccordement (55) relié de manière fluidique à la conduite de fluide (53), lequel peut être relié à un dispositif (56) si bien que le dispositif (56) est relié de manière fluidique à la conduite de fluide (53) et ainsi à la chambre de réaction (3).

2. Système à contenant sous pression (1) selon la revendication 1, dans lequel le contenant sous pression (2) présente un couvercle (5), lequel peut être déplacé entre une position ouverte, dans laquelle la chambre de réaction (3) est ouverte, et une position de fermeture, dans laquelle la chambre de réaction (3) est fermée, et dans lequel le rail (50) est relié de manière rigide au couvercle (5).

3. Système à contenant sous pression (1) selon la revendication 1 ou 2, dans lequel le rail (50) est configuré et est relié au couvercle (5) de telle manière que le couvercle (5) peut être déplacé entre la position ouverte et la position fermée par déplacement, de préférence par levage et abaissement, du rail (50).

4. Système à contenant sous pression (1) selon la revendication 3, dans lequel le rail (50) présente de préférence une zone de fixation (57), par l'intermédiaire de laquelle le rail (50) peut être fixé sur un dispositif de convoyage (60), par exemple un dispositif de levage et d'abaissement destiné à déplacer ou à lever et abaisser le rail (50) et ainsi destiné à déplacer le couvercle (5) entre la position ouverte et la position fermée, et/ou
dans lequel le système à contenant sous pression (1) présente en outre un dispositif de convoyage (60), de préférence un dispositif de levage et d'abaissement, destiné à déplacer ou à lever et à abaisser le rail (50) et ainsi destiné à déplacer le couvercle (5) entre la position ouverte et la position fermée, dans lequel le rail (50) est fixé sur le dispositif de convoyage (60) de préférence par l'intermédiaire de la zone de fixation (57).

5. Système à contenant sous pression (1) selon la revendication 4, dans lequel le rail (50) peut être déplacé, en particulier peut être incliné, par rapport au dispositif de convoyage (60) par rapport à un axe, et dans lequel le système à contenant sous pression (1) présente un mécanisme de détection, lequel est mis au point pour identifier la position fermée du couvercle (5) sur la base d'un déplacement relatif, en particulier d'un déplacement par inclinaison, du rail (50) par rapport au dispositif de convoyage (60) ou par rapport à l'axe, dans lequel le déplacement relatif est entraîné dans la position fermée par le déplacement du couvercle (5),
dans lequel le mécanisme de détection est mis au point de préférence pour détecter du fait du déplacement relatif une force de compression du couvercle (5) pour fermer la chambre de réaction (3) dans la position de fermeture et pour identifier la position de fermeture dès que la force de compression dépasse une force de compression de seuil définie.

6. Système à contenant sous pression (1) selon l'une quelconque des revendications précédentes, dans lequel le contenant sous pression (2) présente une paroi de contenant sous pression (4) entourant la chambre de réaction (3), et dans lequel le rail (50) est relié de manière rigide à la paroi de contenant sous pression (4),
dans lequel de préférence la paroi de contenant sous pression (4) présente un alésage (4e), et
dans lequel la conduite de fluide (53) est reliée de manière fluidique à la chambre de réaction (3) au moins par l'intermédiaire du deuxième raccordement (52) et de l'alésage (4e) et de préférence par l'intermédiaire d'un autre alésage (5d) réalisé dans le couvercle (5).

7. Système à contenant sous pression (1) selon l'une quelconque des revendications précédentes, présentant en outre un moyen de fixation (54) destiné à fixer le rail (50) sur la partie du contenant sous pression (2), de préférence sur la paroi de contenant sous pression (4) et/ou le couvercle (5), dans lequel le moyen de fixation (54) est réalisé de préférence de telle manière que la conduite de fluide (53) est reliée de manière fluidique à la chambre de réaction (3) par l'intermédiaire du deuxième raccordement (52) et du moyen de fixation (54), par exemple par l'intermédiaire d'un alésage de passage (54b) s'étendant à travers le moyen de fixation (54).

8. Système à contenant sous pression (1) selon l'une quelconque des revendications précédentes, présentant en outre un dispositif de commande destiné à commander des dispositifs (56) reliés de manière fluidique au rail (50) et/ou destinés à commander le déplacement du rail (50), en particulier du dispositif de convoyage (60), dans lequel de préférence le dispositif de commande est mis au point pour amener un fluide destiné au rinçage de la conduite de fluide (53) à la conduite de fluide (53) par l'intermédiaire du premier raccordement (51), dans lequel le dispositif de commande est par ailleurs mis au point de manière préférée pour déplacer, avant le rinçage, le couvercle (5) en direction de la position ouverte de telle manière que pendant le rinçage de la conduite de fluide (53), le couvercle (5) est moins ouvert que dans la position ouverte,
dans lequel le système à contenant sous pression (1) présente en outre de manière préférée une soupape (56a) reliée au troisième raccordement (55), dans lequel le dispositif de commande est mis au point pour ouvrir la soupape (56a) avant le rinçage si bien qu'une pression régnant dans la chambre de réaction (3) est établie, dans lequel le dispositif de commande est mis au point de préférence pour fermer la soupape (56a) avant le déplacement du couvercle (5) en direction de la position ouverte.

9. Système à contenant sous pression (1) selon l'une quelconque des revendications précédentes, dans lequel l'au moins un troisième raccordement (55) est réalisé de manière intégrale avec le rail,
et/ou
dans lequel l'au moins un troisième raccordement (55) présente une structure de fixation, par exemple un alésage, en particulier un alésage de passage, pour la fixation du dispositif (56), dans lequel la structure de fixation présente de préférence une zone de fixation, en particulier une zone de fixation correspondant au dispositif, par exemple un filetage et/ou une liaison à déclic, pour la fixation, de préférence la fixation à force et/ou à complémentarité de forme, du dispositif (56) sur le troisième raccordement (55), et/ou
dans lequel l'au moins un troisième raccordement (55) est réalisé pour relier le dispositif (56) au rail (50) dans une direction de montage, dans lequel la direction de montage est sensiblement perpendiculaire à une direction d'écoulement de la conduite de fluide (53), dans lequel la direction de montage est la direction d'extension de la structure de fixation, en particulier de l'alésage,
et/ou
dans lequel le système à contenant sous pression (1) présente au moins deux, de préférence trois, quatre, cinq ou six troisièmes raccordements (55), lesquels sont prévus de préférence sur le même côté du rail (50) par rapport au contenant sous pression (2), de manière particulièrement préférée sur un côté du rail (50) opposé au contenant sous pression (2).

10. Système à contenant sous pression (1) selon l'une quelconque des revendications précédentes, dans lequel le premier raccordement (51) peut être relié de manière fluidique à un compresseur (70), dans lequel le système à contenant sous pression (1) présente de préférence un compresseur (70) relié de manière fluidique au premier raccordement (51), destiné à amener un fluide dans la chambre de réaction (3).

11. Système à contenant sous pression (1) selon la revendication 10, présentant en outre une soupape anti-retour (75) prévue en amont du premier raccordement (51), de préférence entre le premier raccordement (51) et le compresseur (70), laquelle est mise au point pour bloquer un écoulement s'écoulant hors du premier raccordement (51) en direction du compresseur (70).

12. Système à contenant sous pression (1) selon la revendication 10 ou 11, présentant en outre un tampon (76) prévu de préférence en amont du premier raccordement (51), de préférence en amont de la soupape anti-retour (75), de manière particulièrement préférée entre le premier raccordement (51) ou la soupape anti-retour (75) et le compresseur (70) avec un volume propre défini destiné à tamponner du fluide s'écoulant hors du compresseur (70) en direction du premier raccordement (51),
dans lequel de préférence le tampon (76) présente un filtre destiné à filtrer du fluide s'écoulant hors du compresseur (70) en direction du premier raccordement (51), et/ou
dans lequel de préférence le système à contenant sous pression (1) présente en outre une autre soupape anti-retour (77) prévue en amont du tampon (76), de préférence entre le tampon (76) et le compresseur (70), dans lequel l'autre soupape anti-retour (77) est mise au point pour bloquer un écoulement s'écoulant hors du tampon (76) en direction du compresseur (70).

13. Système à contenant sous pression (1) selon l'une quelconque des revendications précédentes, dans lequel le rail (50) est fabriqué à partir d'un matériau résistant aux pressions élevées de préférence de telle manière que le rail (50) peut résister aux pressions régnant dans la chambre de réaction (3) pour déclencher et/ou favoriser des réactions sous pression chimiques et/ou physiques, en particulier à des pressions régnant dans la conduite de fluide (53) dans la plage jusqu'à au moins 200 bar, de préférence jusqu'à au moins 500 bar, et/ou
dans lequel le rail (50) est fabriqué à partir d'un matériau résistant à des produits chimiques, et/ou
dans lequel la conduite de fluide (53) présente un chemisage résistant aux produits chimiques, en particulier un revêtement et/ou un tuyau flexible, dans lequel le chemisage est fabriqué par exemple à partir de matière plastique, de préférence de PTFE.

14. Système à contenant sous pression (1) selon l'une quelconque des revendications précédentes, dans lequel le rail (50) est fabriqué à partir de métal et/ou à partir d'un bloc, de préférence à partir d'un unique bloc, et/ou
dans lequel l'épaisseur de paroi du rail (50) est plus importante que la section transversale de la conduite de fluide (53), et/ou
dans lequel le rail (50) est réalisé de manière allongée, et/ou
dans lequel le rail (50) a une section transversale carrée ou angulaire, de préférence une section transversale rectangulaire ou carrée, et/ou
dans lequel la conduite de fluide (53) présente seulement une direction d'extension.

15. Système à contenant sous pression (1) selon l'une quelconque des revendications précédentes, présentant en outre au moins un dispositif (56) relié à l'au moins un troisième raccordement, dans lequel l'au moins un dispositif (56) présente :
- une soupape, en particulier une soupape (56a, 56b) destinée à réduire de préférence linéairement ou brutalement la pression régnant dans la chambre de réaction (3),
- un dispositif de mesure de pression (56c, 56d) destiné à détecter une pression régnant dans la chambre de réaction (3), et/ou
- une sécurité de pression (56e) comme une soupape de rupture, en particulier une membrane de rupture, dans lequel la protection de pression (56e) est réalisée de préférence sous forme de disque.
